# EUROPEAN PATENT SPECIFICATION

(11) **EP 3 881 728 B1**
(45) Date of publication and mention of the grant of the patent: **26.02.2025**
(21) Application number: 19883923.5
(22) Date of filing: 02.08.2019
(51) Int. Cl.: A47J 31/00, A47J 31/32, A47J 31/52

(54) **EXTRACTION DEVICE, DISPLAY METHOD IN EXTRACTION DEVICE, AND SYSTEM**
EXTRAKTIONSVORRICHTUNG, ANZEIGEVERFAHREN BEI EINER EXTRAKTIONSVORRICHTUNG UND SYSTEM
DISPOSITIF D'EXTRACTION, PROCÉDÉ D'AFFICHAGE DANS UN DISPOSITIF D'EXTRACTION, ET SYSTÈME

(30) Priority: 13.11.2018 JP 2018213319
(43) Date of publication of application: 22.09.2021
(73) Proprietor: Daito Giken, Inc., Taito-ku, Tokyo, 110-0015 (JP)
(72) Inventor: TORIZU Taisuke, Tokyo 104-0031 (JP); TOGASHI Kazuki, Tokyo 104-0031 (JP)
(74) Representative: Klunker IP Patentanwälte PartG mbB
(86) International application number: PCT/JP2019/030548
(87) International publication number: WO 2020/100355

(56) References cited:
- EP-A1- 3 064 099
- WO-A1-2018/183574
- JP-A- 2009 082 562
- US-A1- 2013 133 524
- US-A1- 2015 366 234
- US-A1- 2017 295 984
- US-A1- 2018 271 322

## Description

### Technical Field

The present invention relates to an extraction device that extracts an extract from an ingredient, a display method for the extraction device, and a system.

### Background Art

Known processes for extracting coffee liquid include an immersion extraction (Patent Literature 1, for example), in which ground beans are immersed in hot water, and a percolation extraction (Patent Literature 2, for example), in which hot water percolates through ground beans.

### Citation List

### Patent Literature

Patent Literature 1
   Japanese Patent Laid-Open No. 05-081544
Patent Literature 2
   Japanese Patent Laid-Open No. 2003-024703

US 2013/0133524 A1 discloses an apparatus for brewing beverages comprising a vessel which comprises a sealable chamber for holding a brewing material and a liquid and a filter assembly connected to the sealable chamber. US 2017/295984 A1 discloses a further brewing apparatus.

### Summary of Invention

### Technical Problem

With the conventional extraction, whether it is immersion extraction or percolation extraction, a state in the process of extracting an extract from an ingredient needs to be able to be displayed.

An object of the present invention is to provide a technique that allows display of a state in a process of extracting an extract from an ingredient.

### Solution to Problem

An extraction device according to the present invention is in accordance with claim 1.

A display method according to the present invention is in accordance with claim 10.

A system according to the present invention is in accordance with claim 11.

### Advantageous Effects of Invention

According to the present invention, a state in a process of extracting an extract from an ingredient can be displayed.

### Brief Description of the Drawings

[Figure 1] Figure 1 is a diagram showing an appearance of a beverage making apparatus.
[Figure 2] Figure 2 is a partial front view of the beverage making apparatus in Figure 1.
[Figure 3] Figure 3 is a schematic diagram for illustrating a function of the beverage making apparatus in Figure 1.
[Figure 4] Figure 4 is a partially cut-away perspective view of a separating device.
[Figure 5] Figure 5 is a perspective view of a drive unit and an extraction vessel.
[Figure 6] Figure 6 is diagram showing an open state and a closed state of the extraction vessel in Figure 5.
[Figure 7] Figure 7 is a front view showing some components of an upper unit and a lower unit.
[Figure 8] Figure 8 is a vertical cross-sectional view of the components shown in Figure 7.
[Figure 9] Figure 9 is a schematic diagram showing a middle unit.
[Figure 10] Figure 10 is a block diagram showing a control device of the beverage making apparatus in Figure 1.
[Figures 11] Figures 11(A) and 11(B) are flowcharts showing an example of a control performed by the control device.
[Figure 12] Figure 12 is a schematic diagram showing a liquid delivery amount adjusting device.
[Figure 13] Figure 13 includes a cross-sectional view of the liquid delivery amount adjusting device taken along the line IV-IV in Figure 12 and a cross-sectional view of another example of the liquid delivery amount adjusting device.
[Figure 14] Figure 14 includes diagrams for illustrating a preheating operation.
[Figure 15] Figure 15 includes diagrams for illustrating an operation of pouring hot water from steaming to extraction.
[Figure 16] Figure 16 is a graph showing a variation of an air pressure.
[Figure 17] Figure 17 is a diagram showing a screen in which a plot is displayed.
[Figure 18] Figure 18 is a diagram showing a profile setting screen.
[Figure 19] Figure 19 is a diagram showing a screen in which a plot is displayed.
[Figure 20] Figure 20 is a diagram showing a display screen in which a user operation is reflected.
[Figure 21] Figure 21 is a diagram showing a display screen in which a user operation is reflected.
[Figure 22] Figure 22 is a diagram showing a display screen in which a user operation is reflected.
[Figure 23] Figure 23 is a diagram a screen in which a plot is displayed.
[Figure 24] Figure 24 is a diagram showing a display screen in which information is displayed in the form of a table.
[Figure 25] Figure 25 is a diagram showing a display screen in which information is displayed in the form of a table.
[Figure 26] Figure 26 is a diagram showing a display screen in which information is displayed in the form of a table.
[Figure 27] Figure 27 is a diagram showing a profile displayed in the form of a table.
[Figure 28] Figure 28 is a diagram showing a profile displayed in the form of a table.
[Figure 29] Figure 29 is a diagram showing a profile displayed in the form of a table.
[Figure 30] Figure 30 is a diagram showing a profile displayed in the form of a table.

### Description of Embodiments

Embodiments of the present invention will be described with reference to the drawings. Like components are denoted by like reference numerals, and descriptions thereof will be omitted.

### <1. Overview of Beverage Making Apparatus>

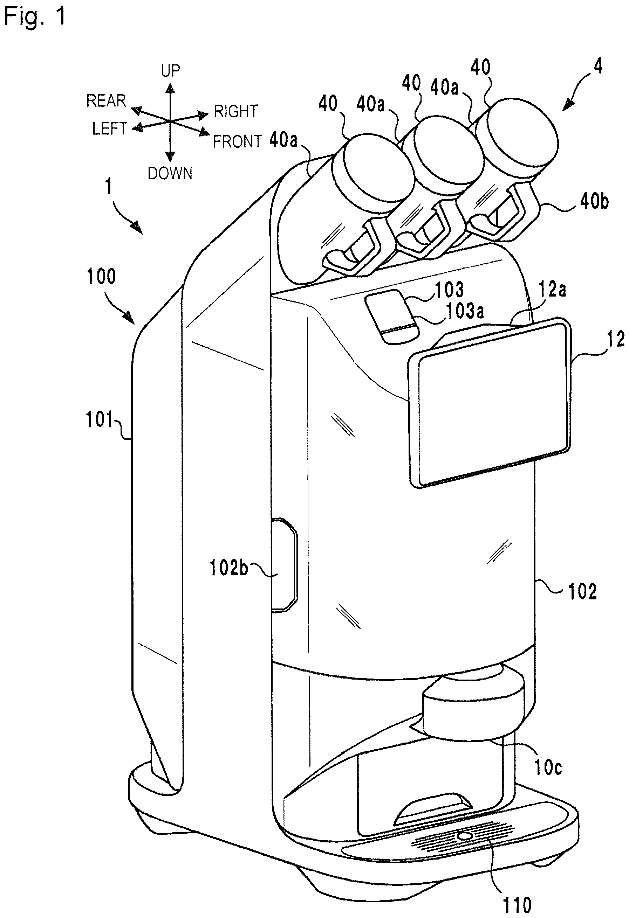

Figure 1 shows an appearance of a beverage making apparatus 1. The beverage making apparatus 1 according to an embodiment is an apparatus that automatically produces a coffee beverage from roasted coffee beans and a liquid (water in this example). The apparatus can produce a cup of coffee beverage in one production operation. Roasted coffee beans as an ingredient can be stored in a canister 40. The beverage making apparatus 1 has a cup mount 110 provided in a lower part thereof, and the produced coffee beverage is poured into a cup from a pouring part 10c.

The beverage making apparatus 1 includes a housing 100 that forms an outer casing of the apparatus 1 and encloses an internal mechanism of the apparatus 1. The housing 100 is generally divided into a main body part 101 and a cover part 102 that forms a part of the front face and a part of the side faces of the beverage making apparatus 1. The cover part 102 is provided with an information display device 12. In this embodiment, the information display device 12 is a touch-panel display, and can display various types of information and receive inputs from an administrator of the apparatus or a consumer of the beverage. The information display device 12 is attached to the cover part 102 by a movement mechanism 12a, which allows the information display device 12 to move in the up-down direction within a certain range.

The cover part 102 is further provided with a bean inlet 103 and a door 103a that opens and closes the bean inlet 103. The opening and closing door 103 can be opened to input a different type of roasted coffee beans than the roasted coffee beans stored in the canister 40. In this way, a special cup of beverage can be provided to the beverage consumer.

In this embodiment, the cover part 102 is made of a material having a transparency, such as acrylic or glass, and forms a transparent cover the whole of which is transparent. Therefore, the internal mechanism covered by the cover part 102 is visible from outside. In this embodiment, a part of a production part that produces the coffee beverage is visible through the cover part 102. In this embodiment, the whole of the main body part 101 is nontransparent, the mechanism in the main body part 101 is difficult to see from outside.

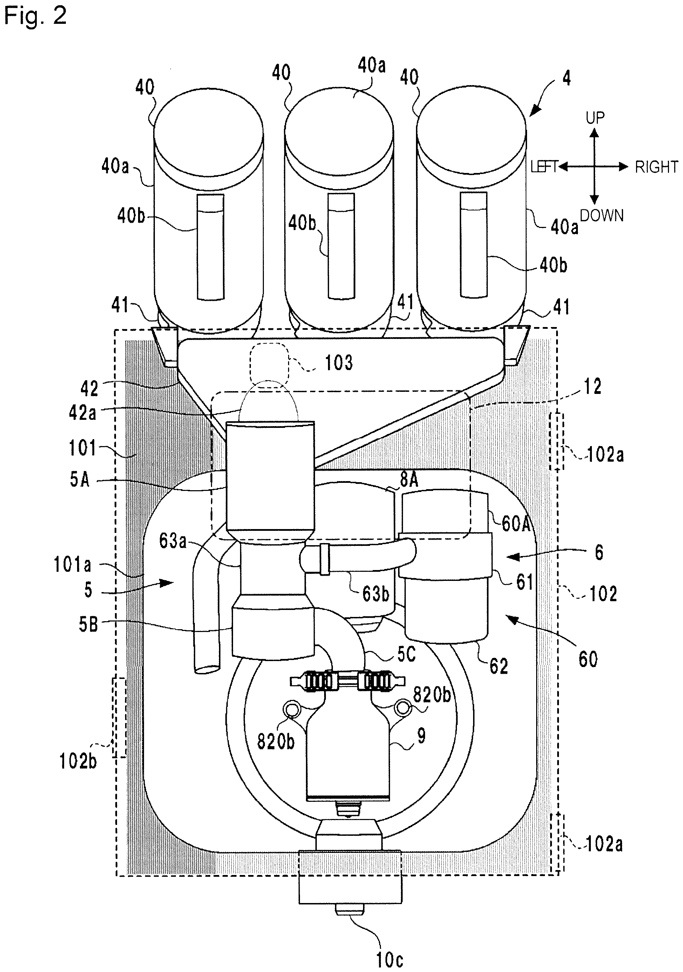

Figure 2 is a partial front view of the beverage making apparatus 1, which shows a part of the production part that can be seen by a user from the front of the beverage making apparatus 1. The cover part 102 and the information display device 12 are shown by imaginary lines.

On the front of the beverage making apparatus 1, the housing 100 has a double-layer structure formed by the main body part 101 and the cover part 102 on the outer side (front side) thereof. A part of the mechanism of the production part is arranged between the main body part 101 and the cover part 12 in the front-rear direction, and is visible to the user through the cover part 102.

In this embodiment, the part of the mechanism of the production part that is visible to the user through the cover part 102 includes a gathering and conveying part 42, grinders 5A and 5B, a separating device 6, and an extraction vessel 9 described later, for example. In the front of the main body part 101, a rectangular recess part 101a, which is recessed toward the rear of the main body part 101, is formed, and the extraction vessel 9 and the like are positioned toward the rear in the recess part 101a.

Since these components are visible from outside through the cover part 102, the administrator can easily perform inspections and operational checks. In addition, the consumer can enjoy seeing the process of producing the coffee beverage.

The cover part 102 is attached to the main body part 101 via a hinge 102a at the right edge thereof so that the cover part 102 can be horizontally opened and closed. The cover part 102 has, at the left edge thereof, an engaging part 102b for maintaining the main body part 101 closed with the cover part 102. The engaging part 102b is a combination of a magnet and a piece of iron, for example. The administrator can open the cover part 102 to perform an inspection or the like of the part of the production part inside the cover part 102 described above.

In this embodiment, the cover part 102 has been described as being horizontally opened. However, the cover part 102 may be of a vertical opening type or a sliding type. The cover part 102 may be unable to be opened.

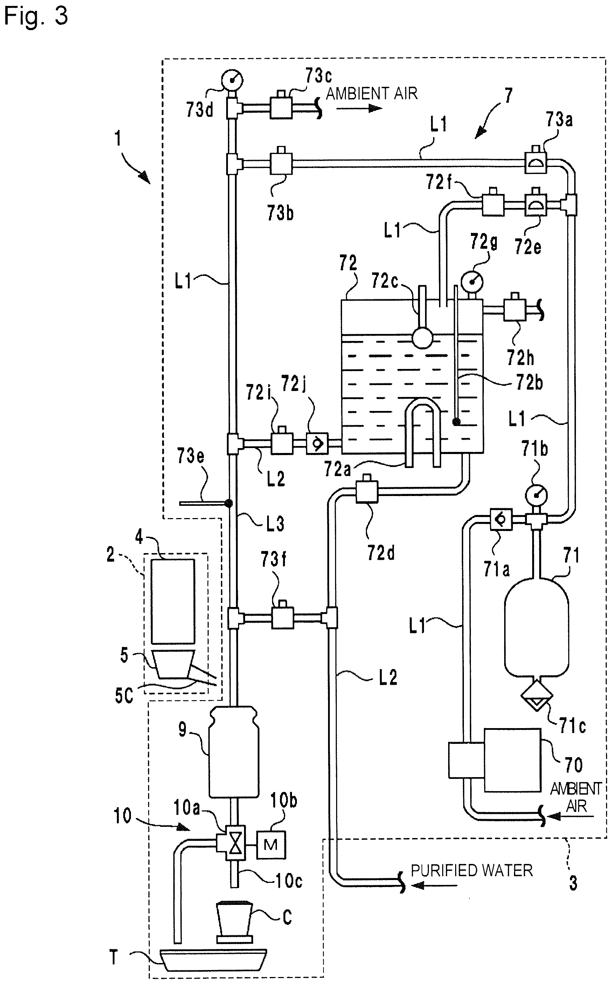

Figure 3 is a schematic diagram for illustrating a function of the beverage making apparatus 1. The beverage making apparatus 1 includes a bean processing device 2 and an extraction device 3 as the coffee beverage production part.

The bean processing device 2 produces ground beans from roasted coffee beans. The extraction device 3 extracts coffee liquid from the ground beans supplied from the bean processing device 2. The extraction device 3 includes a fluid supply unit 7, a drive unit 8 described later, the extraction vessel 9, and a switch unit 10. The ground beans supplied from the bean processing device 2 are input to the extraction vessel 9. The fluid supply unit 7 inputs hot water to the extraction vessel 9. In the extraction vessel 9, coffee liquid is extracted from the ground beans. Hot water containing the extracted coffee liquid is delivered into a cup C as a coffee beverage via the switch unit 10.

### <2. Fluid Supply Unit and Switch Unit>

Configurations of the fluid supply unit 7 and the switch unit 10 will be described with reference to figure 3. First, the fluid supply unit 7 will be described. The fluid supply unit 7 supplies hot water to the extraction vessel 9 and controls the air pressure in the extraction vessel 9, for example. In this specification, any numeric value of the air pressure means an absolute pressure unless otherwise specified, and a gauge pressure means a pressure provided that the atmospheric pressure is 0 atmosphere. The term "atmospheric pressure" means the air pressure of the surroundings of the extraction vessel 9 or the air pressure around the beverage making apparatus. For example, when the beverage making apparatus is located at sea level, the atmospheric pressure is the standard atmosphere (1013.25 hPa) at sea level of International Standard Atmosphere (ISA) defined in 1976 by International Civil Aviation Organization (ICAO).

The fluid supply unit 7 includes systems of piping L1 to L3. The piping L1 is piping in which air flows, and the piping L2 is piping in which water flows. The piping L3 is piping in which both air and water can flow.

The fluid supply unit 7 includes a compressor 70 as a pressure source. The compressor 70 compresses and delivers air. The compressor 70 is driven by a drive source, such as a motor (not shown). The compressed air delivered from the compressor 70 is supplied to a reserve tank (accumulator) 71 via a check valve 71a. The air pressure in the reserve tank 71 is monitored by a pressure sensor 71b, and the compressor 70 is driven so as to keep the air pressure in the reserve tank 71 at a predetermined air pressure (7 atmospheres (a gauge pressure of 6 atmospheres) in this embodiment). The reserve tank 71 includes a drain 71c for drainage, through which water resulting from the compression of air can be discharged.

A water tank 72 stores hot water (water) used as an ingredient of the coffee beverage. The water tank 72 is provided with a heater 72a that heats the water in the water tank 72 and a temperature sensor 72b that measures the temperature of the water. The heater 72a maintains the temperature of the stored hot water at a predetermined temperature (120°C in this embodiment) based on the result of detection by the temperature sensor 72b. For example, the heater 72a is turned on when the temperature of the hot water decreases to 118°C and turned off when the temperature of the hot water increases to 120°C.

The water tank 72 is also provided with a water level sensor 72c. The water level sensor 72c detects the water level of the hot water in the water tank 72. When the water level sensor 72c detects that the water level is lower than a predetermined water level, water is supplied to the water tank 72. In this embodiment, water is supplied via a water purifier (not shown). The piping L2 from the water purifier is provided with a solenoid valve 72d at a midpoint. When the water level sensor 72c detects a drop of the water level, the solenoid valve 72d is opened to supply water, and when a predetermined water level is reached, the solenoid valve 72d is closed to stop the supply of water. In this way, the hot water in the water tank 72 is kept at a certain water level. Water supply to the water tank 72 may be performed each time hot water is discharged to produce a cup of coffee beverage.

The water tank 72 is also provided with a pressure sensor 72g. The pressure sensor 72g detects the air pressure in the water tank 72. The air pressure in the reserve tank 71 is supplied to the water tank 72 via a relief valve 72e and a solenoid valve 72f. The relief valve 72e decreases the air pressure supplied from the reserve tank 71 to a predetermined air pressure. In this embodiment, the relief valve 72e decreases the air pressure to 3 atmospheres (a gauge pressure of 2 atmospheres). The solenoid valve 72f switches between allowing and not allowing the air pressure regulated by the relief valve 72e to be supplied to the water tank 72. The solenoid valve 72f is controlled to be opened and closed to maintain the air pressure in the water tank 72 at 3 atmospheres except when water is supplied to the water tank 72. When supplying water to the water tank 72, the air pressure in the water tank 72 is reduced with a solenoid valve 72h to a pressure (a pressure lower than 2.5 atmospheres, for example) lower than the water pressure of the water so that the water tank 72 is smoothly replenished with the water under the water pressure of the water. The solenoid valve 72h switches between opening and not opening the water tank 72 to the ambient air, and opens the water tank to the ambient air when reducing the air pressure in the water tank 72. The solenoid valve 72h opens the water tank 72 to the ambient air to maintain the interior of the water tank 72 at 3 atmospheres not only when water is supplied to the water tank 72 but also when the air pressure in the water tank 72 is higher than 3 atmospheres.

The hot water in the water tank 72 is supplied to the extraction vessel 9 via a check valve 72j, a solenoid valve 72i and the piping L3. The hot water is supplied to the extraction vessel 9 when the solenoid valve 72i is opened, and the supply of the hot water is stopped when the solenoid valve 72i is closed. The amount of the hot water supplied to the extraction vessel 9 can be controlled by adjusting the open time of the solenoid valve 72i. However, the amount of the supplied hot water may be measured to control the opening and closing of the solenoid valve 72i. The piping L3 is provided with a temperature sensor 73e that measures the temperature of hot water, and the temperature of the hot water supplied to the extraction vessel 9 is monitored.

The air pressure in the reserve tank 71 is supplied to the extraction vessel 9 via a relief valve 73a and a solenoid valve 73b. The relief valve 73a reduces the air pressure supplied from the reserve tank 71 to a predetermined air pressure. In this embodiment, the relief valve 73a can adjustably reduce the air pressure to no more than 5 atmospheres (a gauge pressure of 4 atmospheres). The solenoid valve 73b switches between allowing and not allowing the air pressure regulated by the relief valve 73a to be supplied to the extraction vessel 9. The air pressure in the extraction vessel 9 is detected by a pressure sensor 73d. When pressurizing the extraction vessel 9, the solenoid valve 73b is opened based on the detection result from the pressure sensor 73d to pressurize the extraction vessel 9 to a predetermined air pressure (up to 5 atmospheres (a gauge pressure of 4 atmospheres) in this embodiment). The air pressure in the extraction vessel 9 can be reduced with a solenoid valve 73c. The solenoid valve 73c switches between opening and closing the extraction vessel 9 to the ambient air, and opens the extraction vessel 9 to the ambient air when an abnormal pressure occurs in the extraction vessel 9 (such as when the pressure in the extraction vessel 9 is higher than 5 atmospheres).

Each time the production of a cup of coffee beverage ends, in this embodiment, the interior of the extraction vessel 9 is cleaned with water. When performing the cleaning, the solenoid valve 73f is opened to supply water to the extraction vessel 9.

Next, the switch unit 10 will be described. The switch unit 10 is a unit that switches the destination of the liquid delivered from the extraction vessel 9 between the pouring part 10c and a waste tank T. The switch unit 10 includes a switch valve 10a and a motor 10b that drives the switch valve 10a. When delivering the coffee beverage from the extraction vessel 9, the switch valve 10a switches the flow channel to the pouring part 10c. Then, the coffee beverage is poured into the cup C from the pouring part 10c. When discharging the waste liquid (water) used for the cleaning and the residue (ground beans), the switch valve 10a switches the flow channel to the waste tank T. In this embodiment, the switch valve 10a is a 3-port ball valve. Since the residue passes through the switch valve 10a during the cleaning, the switch valve 10a is preferably a ball valve. The motor 10b rotates a rotating shaft of the ball valve to switch the flow channel.

### <3. Bean Processing Device>

With reference to Figures 1 and 2, the bean processing device 2 will be described. The bean processing device 2 includes a storage device 4 and a griding device 5.

### <3-1. Storage Device>

The storage device 4 includes a plurality of canisters 40 that store roasted coffee beans. In this embodiment, three canisters 40 are provided. The canister 40 includes a cylindrical main body 40a that stores roasted coffee beans and a handle 40b provided on the main body 40a. The canister 40 is configured to be removable from the beverage making apparatus 1.

Each canister 40 may store a different type of roasted coffee beans so that the type of roasted coffee beans used to produce a coffee beverage can be selected by an input operation on the information display device 12. The different types of roasted coffee beans may be different breeds of roasted coffee beans, for example. The different types of roasted coffee beans may be the same breed of coffee beans roasted to different roasting degree. The different types of roasted coffee beans may be different breeds of coffee beans roasted to different roasting degree. At least any one of the three canisters 40 may store a mixture of a plurality of breeds of roasted coffee beans. In the latter case, the breeds of roasted coffee beans may be roasted to the same roasting degree.

Although a plurality of canisters 40 is provided in this embodiment, only one canister 40 may be provided. When a plurality of canisters 40 are provided, all or some of the plurality of canisters 40 may store the same type of roasted coffee beans.

Each canister 40 is removably mounted on a metering and conveying device 41. The metering and conveying device 41 is an electric screw conveyor, for example, and automatically measures out a predetermined amount of roasted coffee beans stored in the canister 40 and delivers the roasted coffee beans downstream.

Each metering and conveying device 41 discharges the roasted coffee beans to a gathering and conveying part 42 located downstream thereof. The gathering and conveying part 42 is formed by a hollow member and forms a conveyance channel for roasted coffee beans from each conveyor 41 to the griding device 5 (the grinder 5A, in particular). The roasted coffee beans discharged from each metering and conveying device 41 move in the gathering and conveying part 42 under their own weight, and flow down into the griding device 5.

In the gathering and conveying part 42, a guide part 42a is formed at a location corresponding to the bean inlet 103. The guide part 42a forms a channel that guides the roasted coffee beans input to the bean inlet 103 to the griding device 5 (the grinder 5A, in particular). This allows production of a coffee beverage containing not only the roasted coffee beans stored in the canisters 40 but also roasted coffee beans input to the bean inlet 103 as an ingredient.

### <3-2. Griding Device>

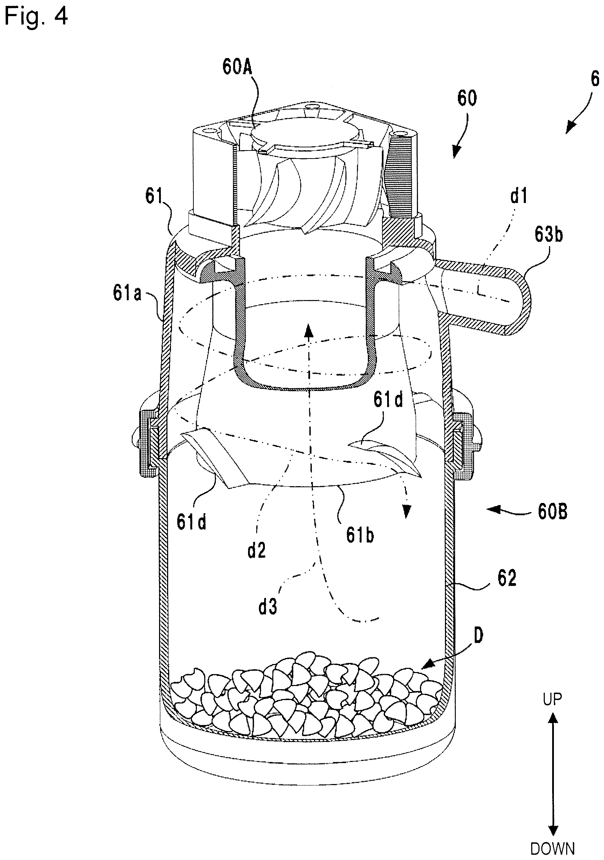

With reference to Figures 2 and 4, the griding device 5 will be described. Figure 4 is a partially cut-away perspective view of the separating device 6. The griding device 5 includes the grinders 5A and 5B and the separating device 6. The grinders 5A and 5B are a mechanism that grinds roasted coffee beans supplied from the storage device 4. The roasted coffee beans supplied from the storage device 4 are first ground by the grinder 5A, then further ground into powder by the grinder 5B, and then input to the extraction vessel 9 through a discharge pipe 5C.

The grinders 5A and 5B differ in grind size. The grinder 5A is a grinder for coarse grinding, and the grinder 5B is a grinder for fine grinding. The grinders 5A and 5B are electric grinders, and include a motor as a drive source and a rotary blade or the like driven by the motor. The size (grind size) of the roasted coffee beans ground can be changed by changing the number of revolutions of the rotary blade.

The separating device 6 is a mechanism that separates an unwanted matter from the ground beans. The separating device 6 includes a channel part 63a arranged between the grinder 5A and the grinder 5B. The channel part 63a is a hollow body that forms a separating chamber through which the ground beans falling freely from the grinder 5A. To the channel part 63a, a channel part 63b extending in a direction (the left-right direction in this embodiment) intersecting with the direction (the up-down direction in this embodiment) of passage of the ground beans is connected, and a suction unit 60 is connected to the channel part 63b. The suction unit 60 sucks in the air in the channel part 63a, thereby sucking in light matters, such as chaff or fine powder. In this way, unwanted matters can be separated from the ground beans.

The suction unit 60 is a centrifugal separation mechanism. The suction unit 60 includes a blower unit 60A and a collecting vessel 60B. In this embodiment, the blower unit 60A is a fan motor, and discharges the air in the collecting vessel 60B upward.

The collecting vessel 60B includes an upper part 61 and a lower part 62 that are separably engaged with each other. The lower part 62 has the shape of a cylinder with an open top and a closed bottom, and defines a space for storing unwanted matters. The upper part 61 forms a lid part attached to the opening of the lower part 62. The upper part 61 includes an outer wall 61a having a cylindrical shape, and an exhaust pipe 61b formed coaxially with the outer wall 61a. The blower unit 60A is fixed to the upper part 61 above the exhaust pipe 61b so as to suck in the air in the exhaust pipe 61b. The channel part 63b is connected to the upper part 61. The channel part 63b opens at the side of the exhaust pipe 61b.

When the blower unit 60A is activated, airflows indicated by arrows d1 to d3 in Figure 4 are caused. By the airflows, air containing unwanted matters is sucked from the channel part 63a into the collecting vessel 60B through the channel part 63b. Since the channel part 63b opens at the side of the exhaust pipe 61b, the air containing unwanted matters swirls round the exhaust pipe 61b. Unwanted matters D fall under their own weight and are collected at a part of the collecting vessel 60B (that is, accumulated on the bottom face of the lower part 62). The air is discharged upward through inside the exhaust pipe 61b.

A plurality of fins 61d are integrally formed on a circumferential face of the exhaust pipe 61b. The plurality of fins 61d are arranged in the circumferential direction of the exhaust pipe 61b. Each fin 61d is inclined with respect to the axial direction of the exhaust pipe 61b. The fins 61 provided in this way promote the swirl of the air containing the unwanted matters D around the exhaust pipe 61b.

In this embodiment, the lower part 62 is made of a transparent material, such as acrylic or glass, and forms a transparent vessel the whole of which is transparent. The lower part 62 is covered with the cover part 102 (Figure 2). The administrator or the beverage consumer can see the unwanted matters D accumulated in the lower part 62 through the circumferential walls of the cover part 102 and the lower part 62. The administrator can easily determine the timing to clean the lower part 62, and the beverage consumer can feel assured about the quality of the coffee beverage being produced by seeing that unwanted matters D have been cleaned off.

In this embodiment, as described above, the roasted coffee beans supplied from the storage device 4 are first coarsely ground by the grinder 5A, and the separating device 6 separates unwanted matters from the coarsely ground beans while the beans are passing through the channel part 63a. The coarsely ground beans from which unwanted matters have been removed are then finely ground by the grinder 5B. The unwanted matters separated by the separating device 6 mainly include chaff and fine powder. These unwanted matters may ruin the flavor of the coffee beverage, and the quality of the coffee beverage can be improved by removing the chaff and the like from the ground beans.

The roasted coffee beans may be ground by one grinder (that is, in one grinding step). However, if the roasted coffee beans are ground in two steps by the two grinders 5A and 5B, the beans can be more easily ground to a uniform grind size, and the coffee liquid can be more uniformly extracted. While grinding beans, a frictional heat may be generated between the cutter and the beans. The two-step grinding can reduce the frictional heat and prevent deterioration (such as in flavor) of the ground beans.

In addition, since the process begins with the coarse grinding, continues with the separation of unwanted matters and ends with the fine grinding, the difference in weight between the unwanted matters and the ground beans (required matter) can be made large when the unwanted matters such as chaff are separated. Therefore, the efficiency of separation of the unwanted matters can be increased, and the ground beans (required matter) can be prevented from being separated as unwanted matters. In addition, since the step of separation of unwanted matters by means of air suction is performed between the coarse grinding and the fine grinding, the ground beans can be cooled by air and prevented from generating heat.

### <4. Drive Unit and Extraction Vessel>

### <4-1. Overview>

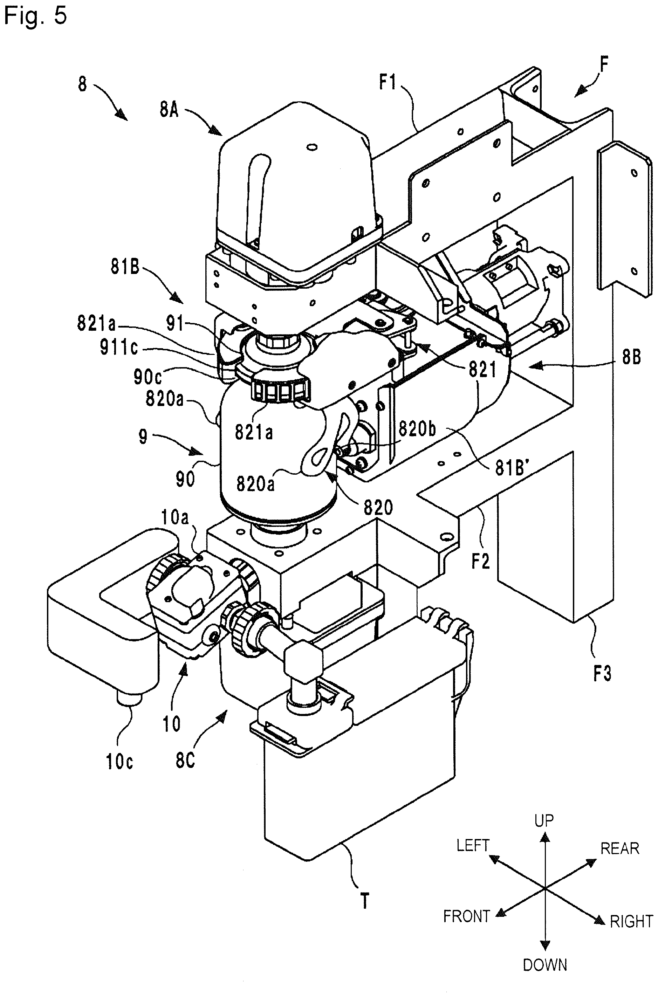

With reference to Figure 5, the drive unit 8 and the extraction vessel 9 of the extraction device 3 will be described. Figure 5 is a perspective view of the drive unit 8 and the extraction vessel 9. A large part of the drive unit 8 is enclosed with the main body part 101.

The drive unit 8 is supported by a frame F. The frame F includes upper and lower beam parts F1 and F2 and a column part F3 that supports the beam parts F1 and F2. The drive unit 8 is generally divided into three units, an upper unit 8A, a middle unit 8B and a lower unit 8C. The upper unit 8A is supported by the beam part F1. The middle unit 8B is supported by the beam part F1 and the column part F3 between the beam part F1 and the beam part F2. The lower unit 8C is supported by the beam part F2.

The extraction vessel 9 is a chamber that includes a vessel main body 90 and a lid unit 91. The middle unit 9 is referred to also as a chamber. The middle unit 8B includes an arm member 820 that removably holds the vessel main body 90. The arm member 820 includes a holding member 820a and a pair of shaft members 820b spaced apart from each other in the left-right direction. The holding member 820a is an elastic C-shaped clip-like member made of resin or the like, and holds the vessel main body 90 by means of the elastic force thereof. The holding member 82a holds the vessel main body 90 by the left and right side parts thereof, and the front of the vessel main body 90 is exposed. Therefore, the inside of the vessel main body 90 can be easily seen from the front.

The vessel main body 90 is manually attached to and detached from the holding member 820a. The vessel main body 90 is attached to the holding member 820a by pressing the vessel main body 90 rearward in the front-rear direction against the holding member 820a. The vessel main body 90 can be separated from the holding member 820a by pulling the vessel main body 90 frontward in the front-rear direction from the holding member 820a.

Each of the pair of shaft members 820b is a rod extending in the front-rear direction and is a member that supports the holding member 820a. Although the number of the shaft members 820b is two in this embodiment, the number of the shaft members 820b may be one or three or more. The holding member 820a is fixed to front end parts of the pair of shaft members 820b. A mechanism described later can move the pair of shaft members 82b back and forth in the front-rear direction, thereby moving the holding member 820a back and forth, thereby translating the vessel main body 90 in the front-rear direction. The middle unit 8B can also rotate to invert the extraction vessel 9 upside down as described later.

### <4-2. Extraction Vessel>

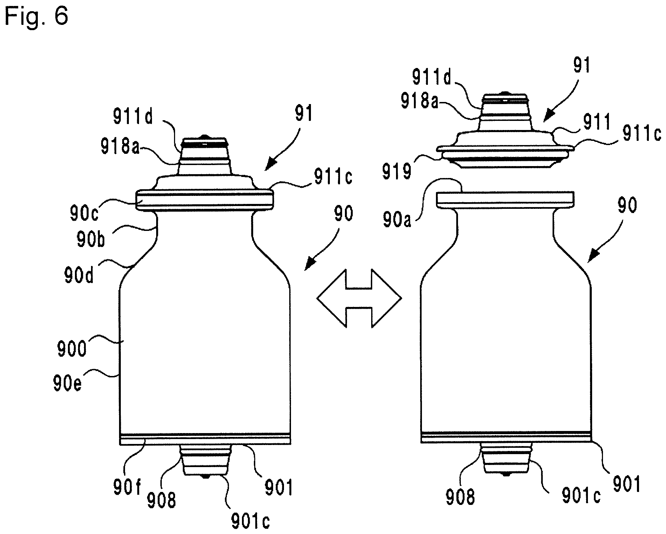

With reference to Figure 6, the extraction vessel 9 will be described. Figure 6 is a diagram showing an open state and a closed state of the extraction vessel 9. As described above, the extraction vessel 9 is inverted upside down by the middle unit 8B. The extraction vessel 9 in Figure 6 is in a basic posture, in which the lid unit 91 is located at the top of the middle unit 9. In the following description, any vertical positional relationship means the vertical positional relationship in the basic posture unless otherwise specified.

The vessel main body 90 is a vessel with a closed bottom. The vessel main body 90 has a bottle-like shape and includes a neck part 90b, a shoulder part 90d, a trunk part 90e and a bottom part 90f. The neck part 90b has a flange part 90c formed at an end part thereof (an upper end part of the vessel main body 90), and the flange part 90c defines an opening 90a that is in communication with the interior space of the vessel main body 90.

The neck part 90b and the trunk part 90e have a cylindrical shape. The shoulder part 90d is a part between the neck part 90b and the trunk part 90e, and has a tapered shape with the cross-sectional area of the interior space thereof gradually decreasing as it goes from the trunk part 90e to the neck part 90b.

The lid unit 91 is a unit that opens and closes the opening 90a. The lid unit 91 is opened and closed (raised and lowered) by the action of the upper unit 8A.

The vessel main body 90 includes a main body member 900 and a bottom member 901. The main body member 900 is a cylindrical member with an open top and an open bottom that forms the neck part 90b, the shoulder part 90d and the trunk part 90e. The bottom member 901 is a member that forms the bottom part 90f, and is inserted and fixed in a lower part of the main body member 900. A seal member 902 is interposed between the main body member 900 and the bottom member 901 to improve the air tightness of the interior of the vessel main body 90.

In this embodiment, the main body member 900 is made of a transparent material, such as acrylic or glass, and forms a transparent vessel the whole of which is transparent. The administrator or the beverage consumer can see the process of brewing the coffee beverage in the vessel main body 90 through the cover part 102 and the main body member 900 of the vessel main body 90. The administrator can easily check the brewing operation, and the beverage consumer can enjoy seeing the brewing process.

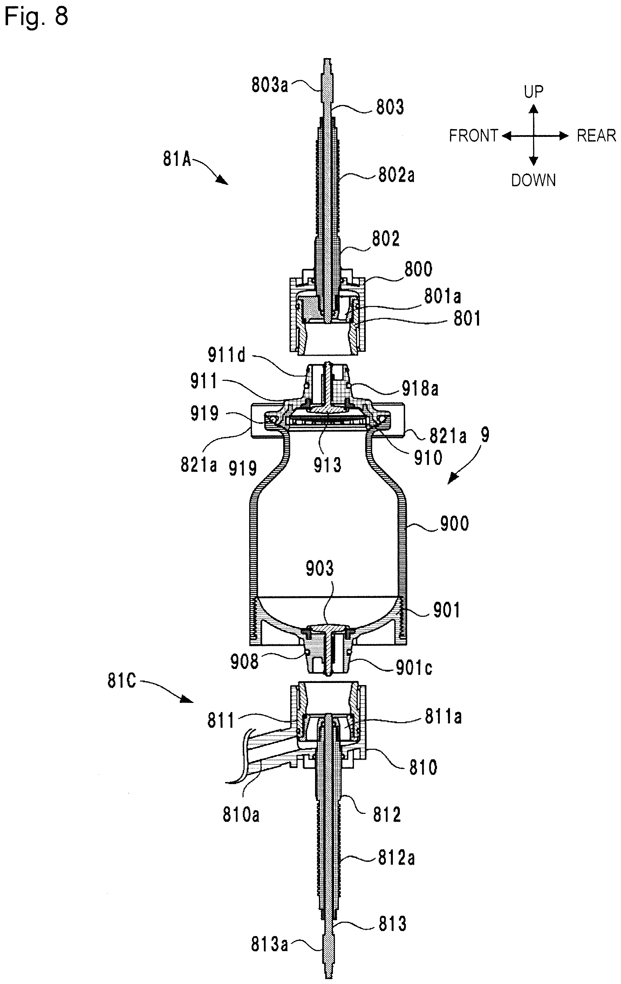

The bottom member 901 has a projection part 901c at the center thereof, and a communicating hole that connects the interior of the vessel main body 90 to the outside and a valve (a valve 903 in Figure 8) that opens and closes the communicating hole are provided on the projection part 901c. The communicating hole is used to discharge the waste liquid and residue in the cleaning of the interior of the vessel main body 90. The projection part 901c is provided with a seal member 908, which is a member for hermetically sealing between the upper unit 8A or lower unit 8C and the bottom member 901.

The lid unit 91 includes a cap-like base member 911. The base member 911 has a projection part 911d and a collar part 911c that rests on the flange part 90c when the lid unit 91 is closed. The projection part 911d has the same structure as the projection part 901c of the vessel main body 90, and is provided with a communicating hole that connects the interior of the vessel main body 90 to the outside and a valve (a valve 913 in Figure 8) that opens and closes the communicating hole. The communicating hole of the projection part 911d is mainly used to pour hot water into the vessel main body 90 and deliver the coffee beverage. The projection part 911d is provided with a seal member 918a. The seal member 918a is a member for hermetically seals between the upper unit 8A or lower unit 8C and the base member 911. The lid unit 91 is also provided with a seal member 919. The seal member 919 improves the air tightness between the lid unit 91 and the vessel main body 90 when the lid unit 91 is closed. The lid unit 91 retains a filter for filtration.

### <4-3. Upper Unit and Lower Unit>

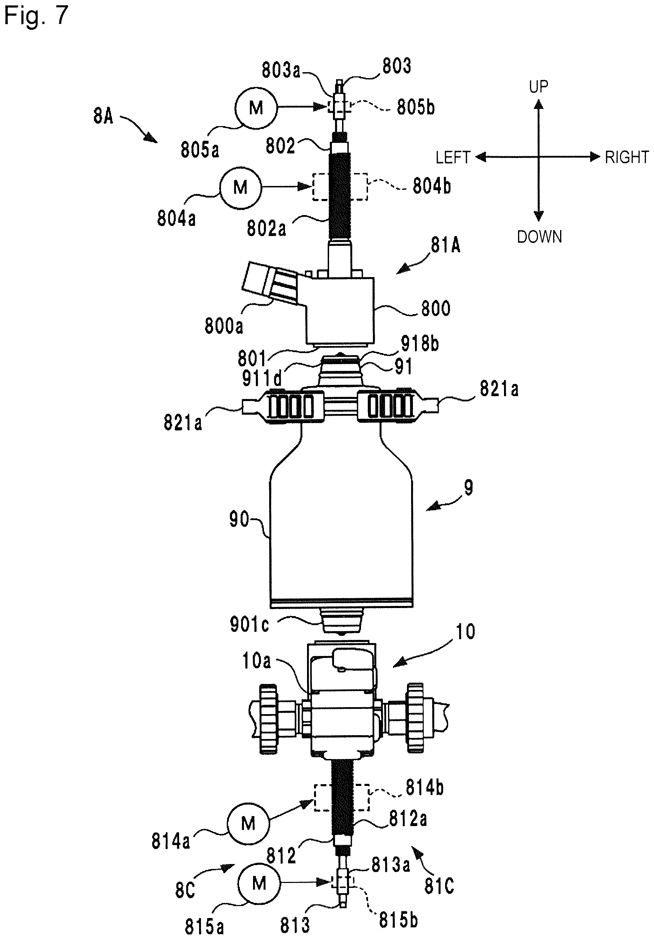

With reference to Figures 7 and 8, the upper unit 8A and the lower unit 8C will be described. Figure 7 is a front view showing some components of the upper unit 8A and the lower unit 8C, and Figure 8 is a vertical cross-sectional view of the components shown in Figure 7.

The upper unit 8A includes an operational unit 81A. The operational unit 81A performs an operation of opening and closing (raising and lowering) the lid unit 91 on the vessel main body 90 and an operation of opening and closing the valves of the projection parts 901c and 911d. The operational unit 81A includes a supporting member 800, a holding member 801, a lifting shaft 802 and a probe 803.

The supporting member 800 is fixed so that the relative position thereof with respect to the frame F does not change, and houses the holding member 801. The supporting member 800 also includes a communicating part 800a that connects the piping L3 to the interior of the supporting member 800. The hot water, water or air pressure supplied from the piping L3 is introduced into the supporting member 800 through the communicating part 800a.

The holding member 801 is a member capable of removably holding the lid unit 91. The holding member 801 has a cylindrical space in which the projection part 911d of the lid unit 91 or the projection part 901c of the bottom member 901 is inserted, and has a mechanism that removably holds the projection parts 911d and 901c. The mechanism is a snap-ring mechanism, for example, and is engaged with the projection part when the projection part is pressed against the mechanism with a certain pressing force and is disengaged from the projection part when the projection part is pulled with a certain separating force. The hot water, water or air pressure supplied from the piping L3 can be supplied into the extraction vessel 9 through the communicating part 800a and the communicating hole 801a of the holding member 801.

The holding member 801 is a movable member that can slide in the vertical direction in the supporting member 800. The lifting shaft 802 is provided with the axial direction thereof coinciding with the vertical direction. The lifting shaft 802 hermetically passes through a top part of the supporting member 800 in the vertical direction, and can be vertically raised and lowered with respect to the supporting member 800.

A lower end part of the lifting shaft 802 is fixed to a top part of the holding member 801. The lifting shaft 802 can be raised and lowered to make the holding member 801 slide upward and downward in the vertical direction, thereby mounting and separating the holding member 801 onto and from the projection part 911d or 901c. The lifting shaft 802 can also be raised and lowered to open and close the lid unit 91 on the vessel main body 90.

A thread 802a is formed on an outer circumferential surface of the lifting shaft 802 to form a lead screw mechanism. A nut 804b is screwed on the thread 802a. The upper unit 8A includes a motor 804a, which drives the nut 804b to rotate at the fixed position (without vertically moving). The rotation of the nut 804b causes raising and lowering of the lifting shaft 802.

The lifting shaft 802 is a tubular shaft having a through-hole along the central axis thereof, and the probe 803 is inserted in the through-hole in such a manner that the probe 803 can vertically slide. The probe 803 hermetically passes through a top part of the holding member 801 in the vertical direction, and can be vertically raised and lowered with respect to the supporting member 800 and the holding member 801.

The probe 803 is an operational element that opens and closes the valves 913 and 903 in the projection parts 911d and 901c. As the probe 803 is lowered, the valves 913 and 903 in the closed state are opened. As the probe 803 is raised, the valves 913 and 903 in the open state are closed (by the action or a return spring (not shown)).

A thread 803a is formed on an outer circumferential surface of the probe 803 to form a lead screw mechanism. A nut 805b is screwed on the thread 803a. The upper unit 8A includes a motor 805a, which drives the nut 805b to rotate at the fixed position (without vertically moving). The rotation of the nut 805b causes raising and lowering of the probe 803.

The lower unit 8C includes an operational unit 81C. The operational unit 81C has the same structure as the operational unit 81A vertically inverted, and performs an operation of opening and closing the valve 913 or 903 in the projection part 911d or 901c. The operational unit 81C is also configured to be able to open and close the lid unit 91. In this embodiment, however, the operational unit 81C is not used to open and close the lid unit 91.

In the following, the operational unit 81C will be described, although the description will be substantially the same as that of the operational unit 81A. The operational unit 81C includes a supporting member 810, a holding member 811, a lifting shaft 812 and a probe 813.

The supporting member 810 is fixed so that the relative position thereof with respect to the frame F does not change, and houses the holding member 811. The supporting member 810 also includes a communicating part 810a that connects the switch valve 10a of the switch unit 10 and the interior of the supporting member 810 to each other. The coffee beverage, water or the residue of the ground beans in the vessel main body 90 is introduced to the switch valve 10a through the communicating part 810a.

The holding member 811 has a cylindrical space in which the projection part 911d of the lid unit 91 or the projection part 901c of the bottom member 901 is inserted, and has a mechanism that removably holds the projection parts 911d and 901c. The mechanism is a snap-ring mechanism, for example, and is engaged with the projection part when the projection part is pressed against the mechanism with a certain pressing force and is disengaged from the projection part when the projection part is pulled with a certain separating force. The coffee beverage, water or the residue of the ground beans in the vessel main body 90 is introduced to the switch valve 10a through the communicating part 810a and a communicating hole 811a of the holding member 811.

The holding member 811 is a movable member that can slide in the vertical direction in the supporting member 810. The lifting shaft 812 is provided with the axial direction thereof coinciding with the vertical direction. The lifting shaft 812 hermetically passes through a bottom part of the supporting member 800 in the vertical direction, and can be vertically raised and lowered with respect to the supporting member 810.

A lower end part of the lifting shaft 812 is fixed to a bottom part of the holding member 811. The lifting shaft 812 can be raised and lowered to make the holding member 811 slide upward and downward in the vertical direction, thereby mounting and separating the holding member 811 onto and from the projection part 901c or 911d.

A thread 812a is formed on an outer circumferential surface of the lifting shaft 812 to form a lead screw mechanism. A nut 814b is screwed on the thread 812a. The lower unit 8C includes a motor 814a, which drives the nut 814b to rotate at the fixed position (without vertically moving). The rotation of the nut 814b causes raising and lowering of the lifting shaft 812.

The lifting shaft 812 is a tubular shaft having a through-hole along the central axis thereof, and the probe 813 is inserted in the through-hole in such a manner that the probe 813 can vertically slide. The probe 813 hermetically passes through a bottom part of the holding member 811 in the vertical direction, and can be vertically raised and lowered with respect to the supporting member 810 and the holding member 811.

The probe 813 is an operational element that opens and closes the valves 913 and 903 in the projection parts 911d and 901c. As the probe 813 is raised, the valves 913 and 903 in the closed state are opened. As the probe 813 is lowered, the valves 913 and 903 in the open state are closed (by the action or a return spring (not shown)).

A thread 813a is formed on an outer circumferential surface of the probe 813 to form a lead screw mechanism. A nut 815b is screwed on the thread 813a. The lower unit 8C includes a motor 815a, which drives the nut 815b to rotate at the fixed position (without vertically moving). The rotation of the nut 815b causes raising and lowering of the probe 813.

### <4-4. Middle Unit>

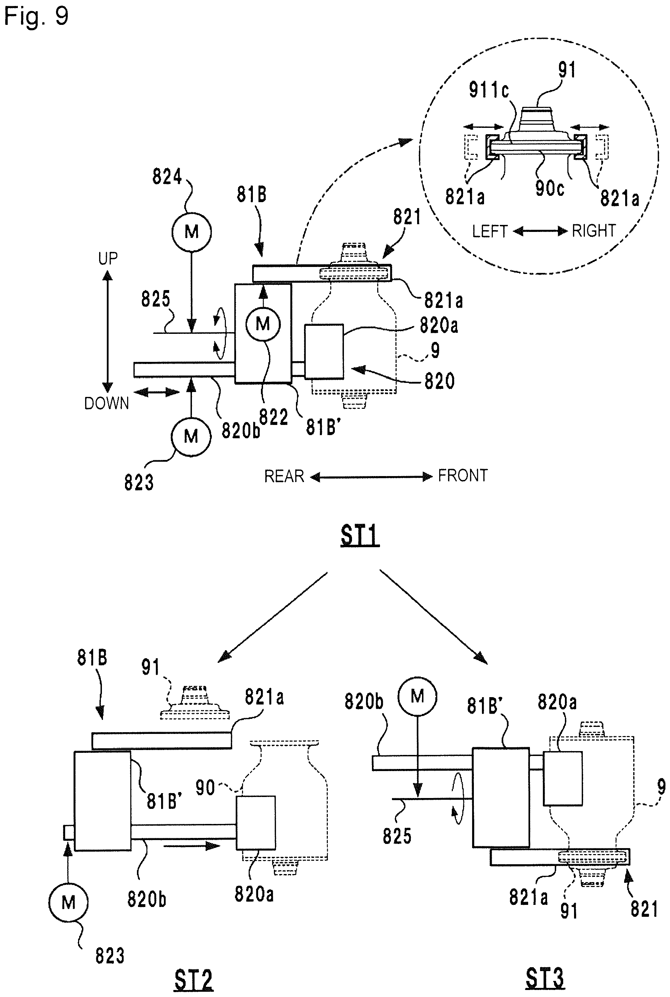

With reference to Figures 5 and 9, the middle unit 8B will be described. Figure 9 is a schematic diagram showing the middle unit 8B. The middle unit 8B includes a supporting unit 81B that supports the extraction vessel 9. The supporting unit 81B includes a unit main body 81B' that supports a lock mechanism 821 in addition to the arm member 820 described above.

The lock mechanism 821 is a mechanism that keeps the lid unit 91 in the closed state on the vessel main body 90. The lock mechanism 821 includes a pair of grasping members 821a that pinch the collar part 911c of the lid unit 91 and the flange part 90c of the vessel main body 90 from above and below. The pair of grasping members 821a have a C-shaped cross section so as to be fitted around the collar part 911c and the flange part 90c, and are opened and closed in the left-right direction by the driving force of a motor 822. When the pair of grasping members 821a are in the closed state, as shown by the solid line in the encircled part of Figure 9, the grasping members 821a are fitted onto the collar part 911c and the flange part 90c to pinch them from above and below, thereby hermetically locking the lid unit 91 onto the vessel main body 90. In this locked state, even if someone tries to open the lid unit 91 by raising the holding member 801 with the lifting shaft 802, the lid unit 91 does not move (the lock is not released). That is, the locking force of the lock mechanism 821 is set to be higher than the force to open the lid unit 91 with the holding member 801. In this way, the lid unit 91 on the vessel main body 90 can be prevented from being opened when an abnormality occurs.

When the pair of grasping members 821a are in the open state, as shown by the dashed line in the encircled part of Figure 9, the grasping members 821a are spaced apart from the collar part 911c and the flange part 90c, and the lid unit 91 and the vessel main body 90 are unlocked from each other.

When the holding member 801 is holding the lid unit 91, and the holding member 801 is raised from a lowered position to a raised position, the lid unit 91 is separated from the vessel main body 90 if the pair of grasping members 821a are in the open state. To the contrary, if the pair of grasping members 821a are in the closed state, the holding member 801 releases the lid unit 91, and only the holding member 801 is raised.

The middle unit 8B further includes a mechanism that horizontally moves the arm member 820 in the front-rear direction with a motor 823 as a drive source. This mechanism allows the vessel main body 90 supported by the arm member 820 to be moved between an extraction position (a state ST1) toward the rear of the beverage making apparatus 1 and a bean input position (a state ST2) toward the front of the beverage making apparatus 1. The bean input position is a position where ground beans are input to the vessel main body 90, and beans ground by the grinder 5B are input through the discharge pipe 5C to the opening 90a of the vessel main body 90 with the lid unit 91 separated therefrom. In other words, the discharge pipe 5C is positioned above the vessel main body 90 located in the bean input position.

The extraction position is a position where the vessel main body 90 can be operated by the operational units 81A and 81C. The extraction position is a position on the same axis as the probes 803 and 813 where the coffee liquid is extracted. The extraction position is located further toward the rear than the bean input position. Figures 5, 7 and 8 show the vessel main body 90 in the extraction position. Since the vessel main body 90 is located at different positions between when inputting ground beans and when extracting the coffee liquid and supplying water, steam produced when extracting the coffee liquid can be prevented from coming into contact with the discharge pipe 5C, which is a part for supplying ground beans.

The middle unit 8B further includes a mechanism that rotates the supporting unit 81B about a shaft 825 extending in the front-rear direction with a motor 824 as a drive source. This mechanism allows the posture of the vessel main body 90 to be changed from an upright posture with the neck part 90b at the top (in the state ST1) to an inverted posture with the neck part 90b at the bottom (in a state ST3). While the extraction vessel 9 is being rotated, the lock mechanism 821 keeps the lid unit 91 locked onto the vessel main body 90. The vertical positional relationship concerning the extraction vessel 9 is inverse between the upright posture and the inverted posture. In the inverted posture, the projection part 911d is located at the position of the projection part 901c in the upright posture. In the inverted posture, the projection part 901c is located at the position of the projection part 911d in the upright posture. Therefore, in the inverted posture, the operational unit 81A can perform the operation of opening and closing the valve 903, and the operational unit 81C can perform the operation of opening and closing the valve 913.

### <5. Control Device>

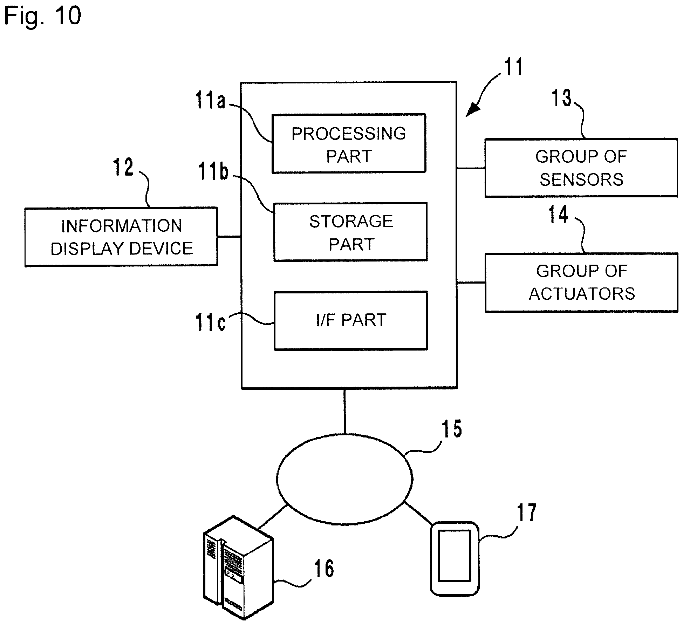

With reference to Figure 10, a control device 11 of the beverage making apparatus 1 will be described. Figure 10 is a block diagram showing the control device 11.

The control device 11 controls the whole of the beverage making apparatus 1. The control device includes a processing part 11a, a storage part 11b, and an interface (I/F) part 11c. The processing part 11a is a processor, such as a CPU. The storage part 11b is a RAM or ROM, for example. The I/F part 11c includes an input/output interface for input and output signals between an external device and the processing part 11a. The I/F part 11c further includes a communication interface capable of data communication with a server 16 or a mobile terminal 17 over a communication network 15, such as the Internet. The server 16 can communicate with the mobile terminal 17, such as a smartphone, over the communication network 15, and can receive a request for beverage production, customer feedback or other information from the mobile terminal 17 of the beverage consumer. The beverage making apparatus 1, the server 16 and the mobile terminal 17 form a system for extracting coffee liquid from coffee beans.

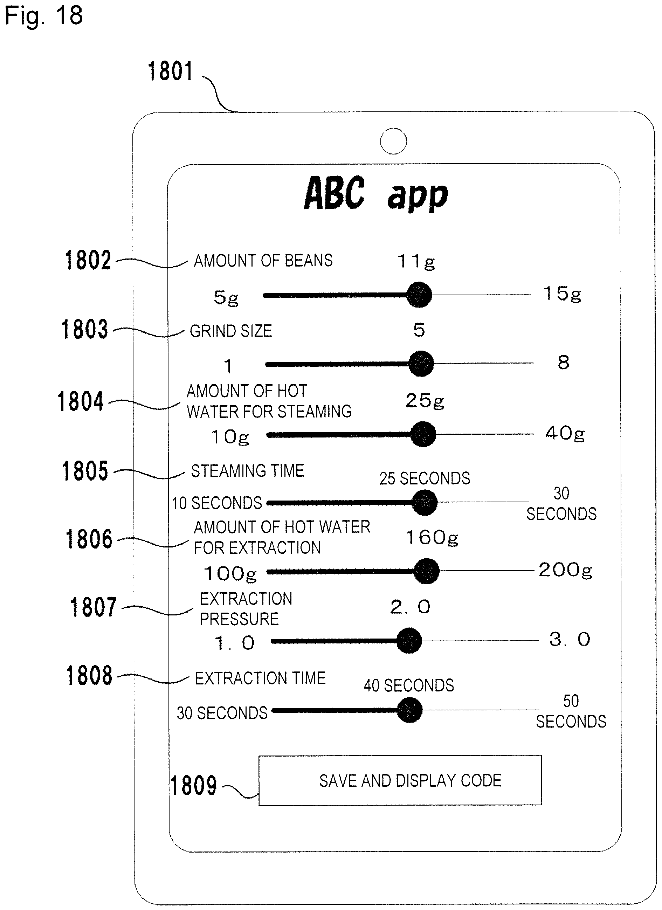

A consumer (user) of a beverage can use the mobile terminal 17 to set a profile for beverage production. Figure 18 is a diagram showing an example of a profile setting screen displayed on the mobile terminal 17. A screen 1801 shown in Figure 18 allows the user to adjust the amount of hot water for extraction on the mobile terminal 17. The screen 1801 shown in Figure 18 shows basically the same setting items displayed by the information display device 12, and the user can adjust the amount of hot water for extraction or the like to a preferable value on the mobile terminal 17 before visiting the cafe.

A display area 1802 allows the user to adjust and set the amount of coffee beans as desired. A display area 1803 allows the user to adjust and set the grind size as desired. A display area 1804 allows the user to adjust and set the amount of hot water for steaming as desired. A display area 1805 allows the user to adjust and set the steaming time as desired. A display area 1806 allows the user to adjust and set the amount of hot water for extraction as desired. A display area 1807 allows the user to adjust and set the extraction pressure as desired. A display area 1808 allows the user to adjust and set the extraction time as desired.

A button 1809 is a button to enter the settings in the display areas 1802 to 1808. In the case shown in Figure 18, once the button 1809 is pressed, the settings in the display areas 1802 to 1808 are saved, and a two-dimensional code is displayed. In the cafe, the user can communicate the settings in the display areas 1802 to 1808 to the information display device 12 by holding the two-dimensional code displayed on the mobile terminal 17 over the imaging part of the information display device 12. The button 1809 may not be a button for displaying a two-dimensional code. For example, the button 1809 may be a button for entering and saving the settings in the display areas 1802 to 1808, and the settings in the display areas 1802 to 1808 may be transmitted to the information display device 12 via a short-range radio communication I/F.

Since the user can adjust the parameters for brewing of a coffee beverage shown in Figure 18 on the mobile terminal 17, the user can easily feel as if the user were a barista and brewed coffee. In this embodiment, a set of parameters for brewing of a coffee beverage such as those shown in Figure 18 is referred to as an extraction profile or a recipe.

The processing part 11a executes a program stored in the storage part 11b and controls a group of actuators 14 according to a command from the information display device 12, a detection result from a group of sensors 13, or a command from the server 16. The group of sensors 13 includes various sensors provided in the beverage making apparatus 1 (such as a temperature sensor for hot water, an operating position sensor for a mechanism, or a pressure sensor). The group of actuators 14 includes various actuators provided in the beverage making apparatus 1 (such as a motor, a solenoid valve, or a heater) .

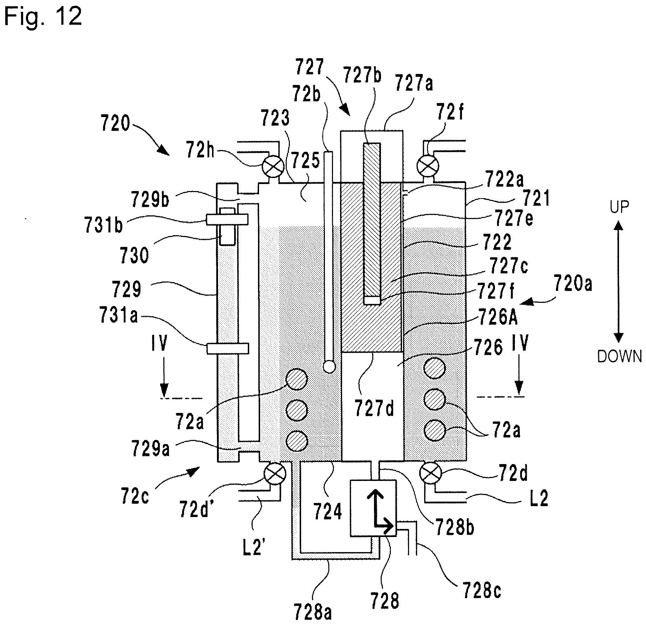

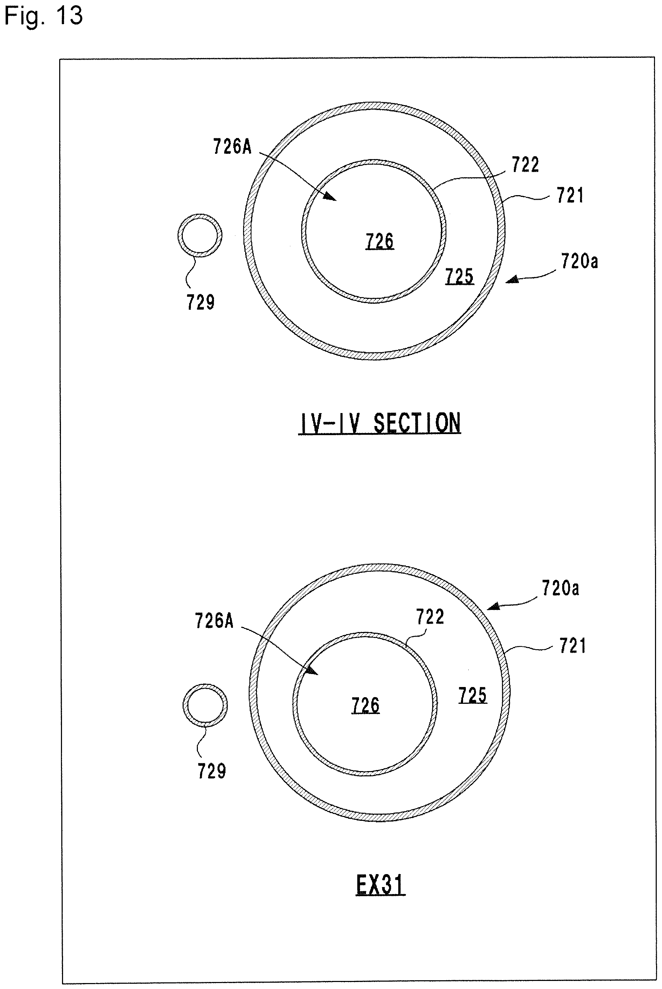

Next, a liquid delivery amount adjusting device for the water tank 72 will be described. In this embodiment, supply (pouring) of hot water from the water tank 72 to the extraction vessel 9 is achieved by a liquid delivery amount adjusting device in which the water tank 72 is provided as shown in Figure 12. Figure 12 is a schematic diagram showing a liquid delivery amount adjusting device 720, and Figure 13 includes a cross-sectional view of the liquid delivery amount adjusting device 720 taken along the line IV-IV in Figure 12 and a cross-sectional view showing another example (configuration example EX31) of the liquid delivery amount adjusting device 720. The liquid delivery amount adjusting device 720 includes a water tank similar to the water tank 72 that stores hot water (water) used as an ingredient of a coffee beverage and a mechanism for delivering a predetermined amount of hot water. This allows successive deliveries of hot water required for a cup of coffee beverage. In addition, the amount of hot water delivered for a cup of coffee beverage can be changed. In the following description, components having the same functions as those of the water tank 72 will be denoted by the same reference numerals.

The liquid delivery amount adjusting device 720 has a tank 720a that stores hot water. An outer wall of the tank 720a includes a circumferential wall 721, a top wall 723 bonded to an upper edge part of the circumferential wall 721, and a bottom wall 724 bonded to a lower edge part of the circumferential wall 721, and the tank 720a has a cylindrical shape as a whole as can be seen from the cross-sectional views of Figure 13. A partition wall 722 is provided in the tank 720a, and the partition wall 722 divides the interior space of the tank 720a into an outer cylindrical space 725 and an inner columnar space 726A. Although the partition wall 722 is a cylindrical wall arranged concentrically with the circumferential wall 721 in this embodiment, the partition wall 722 may be eccentric with respect to the circumferential wall 721 as shown in the configuration example EX31 in Figure 13.

The space 725 forms a storage part that stores hot water. The space 725 is referred to also as a storage part 725. A movable member 727c is arranged in an upper part of the space 726A, and a space 726, which is the part of the space 726A below the movable member 727c, also forms a storage part that stores hot water. The space 726 is referred to also as a storage part 726. Since the storage part 725 and the storage part 726 are separated by the partition wall 722, which is a common wall, the tank 720a has a reduced size compared with the case where different walls are used to separate the spaces.

The storage part 725 is provided with a heater 72a that heats water in the storage part 725 and a temperature sensor 72b that measures the temperature of the water. The heater 72a maintains the temperature of the stored hot water at a predetermined temperature (120°C in this embodiment) based on the result of detection by the temperature sensor 72b. For example, the heater 72a is turned on when the temperature of the hot water decreases to 118°C and turned off when the temperature of the hot water increases to 120°C).

Piping for supplying the air pressure in the reserve tank 71 (see Figure 3) is connected to a part of the top wall 723 that defines the storage part 725, and a solenoid valve 72f is provided at the connection between the top wall 723 and this piping. The liquid delivery amount adjusting device 720 includes a sensor (not shown, a sensor corresponding to the pressure sensor 72g shown in Figure 3, for example) that detects the air pressure in the storage part 725, and the solenoid valve 72f switches between allowing and not allowing the air pressure regulated by a relief valve 72e (see Figure 3) to be supplied to the storage part 725. The solenoid valve 72f is controlled to be opened and closed to maintain the air pressure in the storage part 725 at a predetermined air pressure, such as 3 atmospheres, except when water is supplied to the storage part 725.

Piping that connects the storage part 725 to the ambient air is also connected to the part of the top wall 723 that defines the storage part 725, and a solenoid valve 72h is provided at the connection between the top wall 723 and this piping. When supplying water to the storage part 725, the air pressure in the storage part 725 is reduced with a solenoid valve 72h to a pressure lower than 2.5 atmospheres so that the storage part 725 is smoothly replenished with tap water under the pressure of the water. The solenoid valve 72h switches between opening and closing the water tank 72 to the ambient air, and opens the storage part 725 to the ambient air when reducing the air pressure in the storage part 725. The solenoid valve 72h opens the storage part 725 to the ambient air to maintain the interior of the storage part 725 at 3 atmospheres, for example, not only when water is supplied to the storage part 725 but also when the air pressure in the storage part 725 is higher than 3 atmospheres.

Piping L2 for supplying water to the storage part 725 is connected to a part of the bottom wall 724 that defines the storage part 725, and a solenoid valve 72d is provided at the connection between the bottom wall 724 and this piping L2. The solenoid valve 72d is controlled to be opened and closed based on the result of detection by a water level sensor 72c described later, and controls the level of the hot water in the storage part 725.

Piping L2' for discharging the hot water in the storage part 725 is connected to the part of the bottom wall 724 that defines the storage part 725, and a solenoid valve 72d' is provided at the connection between the bottom wall 724 and this piping L2'. When discharging the hot water in the storage part 725, the solenoid valve 72d' is opened to discharge the hot water in the storage part 725 into the piping L2'.

The storage part 726 is a space whose volume can be changed by moving the movable member 727c. The storage part 726 is supplied with hot water from the storage part 725 via piping 728a, a solenoid valve 728 and piping 728b. The piping 728a connects the part of the bottom wall 724 that defines the storage part 725 and the solenoid valve 728 to each other. The piping 728b connects the part of the bottom wall 724 that defines the storage part 726 and the solenoid valve 728 to each other.

In this embodiment, the solenoid valve 728 is a three-way valve and can switch between allowing and not allowing communication between the piping 728b and the piping 728a and between allowing not allowing communication between the piping 728b and piping 728c. The solenoid 728 valve can also isolate all the pieces of piping from each other. The piping 728c is piping for delivering the hot water in the storage part 726 to the extraction vessel 9.

By switching between allowing and not allowing communication between the piping 728b and the piping 728a, the solenoid valve 728 can switch between connecting the storage parts 725 and 726 to each other and isolating the storage parts 725 and 726 from each other. By switching between allowing and not allowing communication between the piping 728b and the piping 728c, the solenoid valve 728 can switch between delivering hot water from the storage part 726 and storing hot water in the storage part 726.

When the solenoid valve 728 is connecting the piping 728b and the piping 728a to each other, the solenoid valve 728 is isolating the piping 728b and the piping 728c from each other. On the other hand, when the solenoid valve 728 is connecting the piping 728b and the piping 728c to each other, the solenoid valve 728 is isolating the piping 728b and the piping 728a from each other. The arrows shown in the solenoid valve 728 in Figure 12 indicate the operational states of the solenoid valve 728. In the example shown in Figure 12, the piping 728b and the piping 728c are connected to each other, and the piping 728b and the piping 728a are isolated from each other.

In this embodiment, the solenoid valve 728 is a three-way valve, and switching between the pieces of piping is achieved by one solenoid valve 728. However, the piping 728b may be divided into two pieces of piping, and a valve for switching between allowing and not allowing communication between one piece of piping 728b and the piping 728a and a valve for switching between allowing and not allowing communication between the other piece of piping 728b and the piping 728c may be provided.

The liquid delivery amount adjusting device 720 includes a drive unit 727. The drive unit 727 is controlled according to the amount of hot water to be delivered from the storage part 726 to change the volume of the storage part 726. The amount of hot water required for a cup of coffee varies with the size of the coffee cup. The drive unit 727 adjusts the volume of the storage part 726 so that an amount of hot water appropriate to the size or the like of the coffee cup is delivered from the storage part 726.

The drive unit 727 in this embodiment is configured to change the volume of the storage part 726 by vertically moving the movable member 727c. The movable member 727c is a piston-like member that is configured to be inserted in the space 726A and to slide in the vertical direction, and a bottom face 727d of the movable member 727c forms an upper wall of the storage part 726. The volume of the storage part 726 changes as the bottom face 727d is raised and lowered.

The volume of the storage part 726 may be changed by moving the lower or side wall, rather than by moving the upper wall as in this embodiment.

The movable member 727c includes a seal member (not shown) that provides a seal between the movable member 727c and an inner face of the partition wall 722, and slides on the inner face of the partition wall 722 in a fluid-tight manner. However, a groove 727e extending in the vertical direction is formed in a circumferential face of the movable member 727c, so that there is a gap between the movable member 727c and the inner face of the partition wall 722 at the groove 727e.

The groove 727e is formed in communication with an opening 722a that passes through the partition wall 722 in the thickness direction thereof. The opening 722a is an air communication part that is formed at a location above the highest water level of the hot water in the storage part 725 (that is, the location of a sensor 731b described later) and connects the storage part 725 and the space 726A to each other. Air flows between the storage part 725 and the storage part 726 through the opening 722a and the groove 727e, so that these spaces have the same internal air pressure. When the storage parts 725 and 726 are constantly kept at the atmospheric pressure, channels in communication with the ambient air may be separately provided.

The drive unit 727 includes a motor 727a as a drive source supported by the top wall 723, and a threaded shaft 727b as a movement mechanism that moves the movable member 727c. The threaded shaft 727b extends in the vertical direction and is rotated by a driving force of the motor 727a. The movable member 727c has a threaded hole 727f formed in an upper face thereof, and the threaded shaft 727b is engaged with the threaded hole 727f. The movable member 727c is provided with a detent (not shown) and moves in the vertical direction as the threaded shaft 727b rotates. The detent may be a recess and a projection extending in the vertical direction formed in the inner face of the partition wall 722 and the circumferential face of the movable member 727c, respectively, for example.

In this embodiment, a thread mechanism including the threaded shaft 727b and the threaded hole 727f is used as the movement mechanism for moving the movable member 727c. However, the present invention is not limited thereto, and other mechanisms, such as a rack-and-pinion mechanism, can also be used.

The water level sensor 72c is a measurement unit that measures the water level of the hot water in the storage part 725. The water level sensor 72c includes a storage part 729 that has a hollow cylindrical shape and vertically extends, a float 730 provided in the storage part 729, and a lower sensor 731a and an upper sensor 731b that detect the float 730.

The storage part 729 is in communication with the storage part 725 at a communication part 729a provided at a location below the sensor 731a and at a communication part 729b provided at a location above the sensor 731b. The hot water in the storage part 725 flows into the storage part 729 through the communication part 729a. The communication part 729b is an air communication part that connects the storage part 725 and the storage part 729 to each other, and air flows between the storage part 725 and the storage part 729 through the communication part 729b. In this way, the water level of the hot water in the storage part 729 is the same as the water level of the hot water in the storage part 725.

In this embodiment, the storage part 729 is made of a transparent material, such as glass or acrylic. Therefore, the water level of the hot water in the storage part 729 can be seen from outside, so that the user can check the water level of the hot water in the storage part 725. Of course, a transparent part may be formed in the circumferential wall (721) of the storage part 725 so that the water level in the storage part 725 can be seen from outside.

The float 730 can be any float that can float on hot water in the storage part 729.

The sensors 731a and 731b are optical sensors (photo-interrupters), and detect the float 730 from outside the storage part 729. When the sensor 731a detects the float 730, the solenoid valve 72d is opened to supply water to the storage part 725. That is, the sensor 731a monitors the lower limit of the water level of the hot water in the storage part 725. The lower limit of the water level is set above the location of the heater 72a, so that heating without water by the heater 72a can be prevented.

When the sensor 731b detects the float 730, the solenoid valve 72d is closed to stop the supply of water to the storage part 725. That is, the sensor 731b monitors the upper limit of the water level of the hot water in the storage part 725.

A mechanism similar to the water level sensor 72c may be built in the storage part 725. However, if the water level sensor 72c is built outside the storage part 725 as in this embodiment, the water level in the storage part 725 can be easily checked from outside.

### <6. Example of Operation Control>

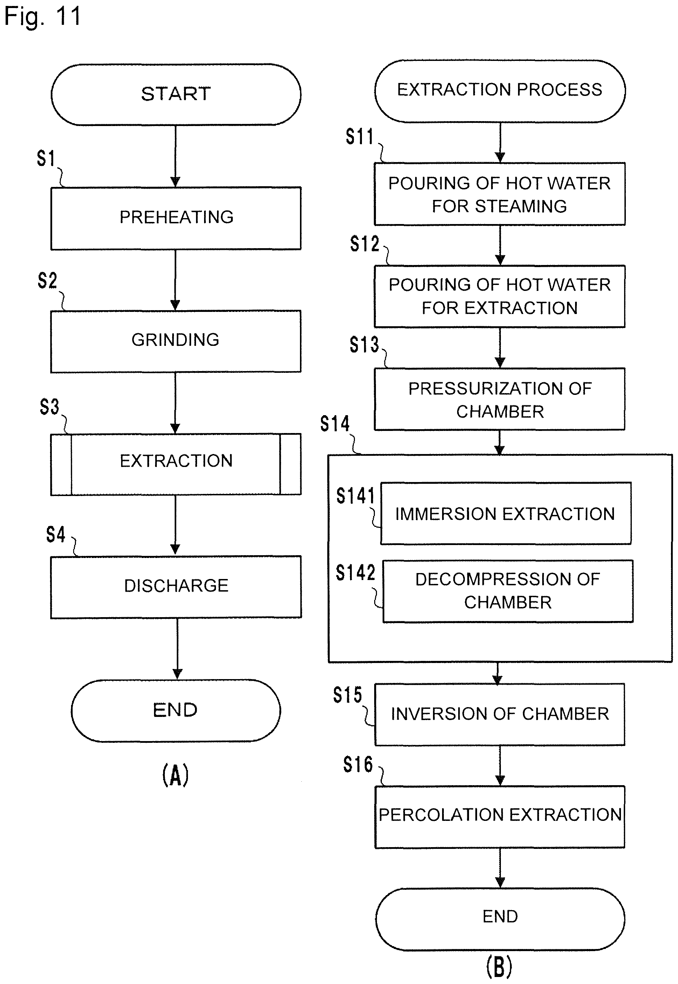

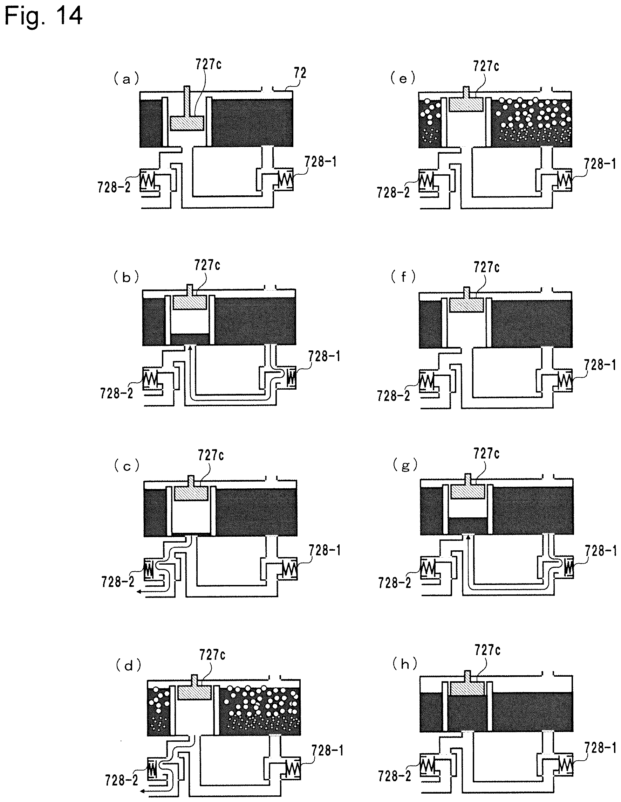

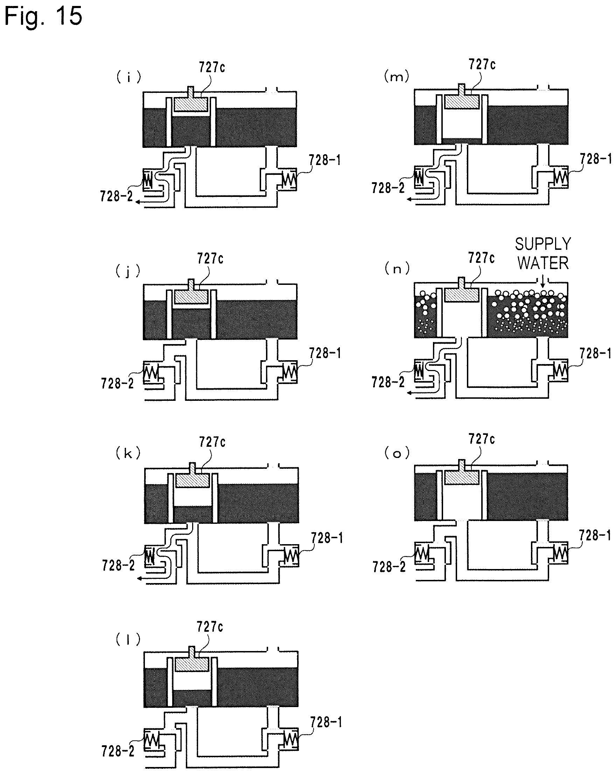

With reference to Figures 11A(A) and 11(B) and Figures 12,14, 15, 16 and 17, an example of a process of controlling the beverage making apparatus 1 performed by the processing part 11a will be described. Figure 11(A) shows an example of a control involved with one coffee beverage productionoperation. A state of the beverage making apparatus 1 before a production command occurs is referred to as a standby state. In the standby state, each mechanism is in the state described below. Note that, in Figure 14 and 15, the solenoid valve 728 is shown as solenoid valves 728-1 and 728-2 for the convenience of explanation of the operation. A state where the piping 728b and the piping 728a are in communication with each other in the liquid delivery amount adjusting device shown in Figure 12 corresponds to a state where the solenoid valve 728-1 is in the open state and the solenoid valve 728-2 is in the closed state in Figures 14 and 15. On the other hand, the state where the piping 728b and the piping 728c are in communication with each other in the liquid delivery amount adjusting device shown in Figure 12 corresponds to a state where the solenoid valve 728-1 is in the closed state and the solenoid valve 728-2 is in the open state in Figures 14 and 15.

The extraction device 3 is in the state shown in Figure 5. The extraction vessel 9 is in the upright posture and is located in the extraction position. The lock mechanism 821 is in the closed state, and the lid unit 91 closes the opening 90a of the vessel main body 90. The holding member 801 is at the lowered position and is mounted on the projection part 911d. The holding member 811 is at the raised position and is mounted on the projection part 901c. The valves 903 and 913 are in the closed state. The switch valve 10a allows communication of the communicating part 810a of the operational unit 8C to the waste tank T.

In the standby state, when a coffee beverage production command occurs, the process shown in Figure 11(A) is performed. In Step S1, a preheating processing is performed. This processing is a processing of pouring hot water into the vessel main body 90 to heat the vessel main body 90 in advance. First, the valves 903 and 913 are opened. As a result, the piping L3, the extraction vessel 9 and the waste tank T come into communication with each other.

At this point, the movable member 727c is located at a predetermined initial position as shown in Figure 14(a). The movable member 727c is then raised as shown in Figure 14(b) so that an amount of hot water for a cup can be accommodated in the storage part 726. The solenoid valve 728 is then switched to connect the piping 728b and the piping 728a to each other to store a predetermined small amount of hot water (smaller than the amount of hot water for steaming) in the storage part 726 for preheating. The solenoid valve 728 is then switched to connect the piping 728b and the piping 728c to each other as shown in Figure 14(c) to pour the small amount of hot water for preheating into the extraction vessel 9.

The air pressure in the reserve tank 71 is supplied to the water tank 72 via the relief valve 72e and the solenoid valve 72f, and the relief valve 72e decreases the air pressure supplied from the reserve tank 71 to a predetermined air pressure. In this embodiment, the relief valve 72e decreases the air pressure to 3 atmospheres (a gauge pressure of 2 atmospheres). In the course of the decreasing of the air pressure, as shown in Figure 14(d), boiling of the water in the water tank 72 is promoted, and the vapor is supplied to the extraction vessel 9 via the opening 722a, the storage part 726 and the piping 728c. In this process, the solenoid valve 728 is controlled to connect the piping 728b and the piping 728c to each other for a predetermined time. Since the vapor is delivered from the tank 720a to the extraction vessel 9, the pressure in the tank 720a decreases, the hot water in the tank 720a is agitated, and the upper layer of the hot water of a relatively high temperature and the lower layer of the hot water of a relatively low temperature are mixed to have a uniform temperature. Then, if the temperature has not reached a desired temperature (lower than 118°C, for example), the heater 72a is turned on to boil the hot water in the tank 720a. Even after the piping 728b and the piping 728c are isolated from each other, as shown in Figures 14(e) and 14(f), the hot water in the water tank 72 continues being boiled until the air pressure decreases to 3 atmospheres.

As shown in Figure 14(g), the solenoid valve 728 is then switched to connect the piping 728b and the piping 728a to each other to store an amount (30 cc, for example) of hot water for steaming in the storage part 726. The piping 728b and the piping 728a are then isolated from each other as shown in Figure 14(h). By this processing, the interior of the extraction vessel 9 is preheated, and the decrease of the temperature of the hot water can be reduced in the following production of the coffee beverage.

In Step S2, a grinding processing is performed. In this step, roasted coffee beans are ground, and the ground beans are input to the vessel main body 90. First, the lock mechanism 821 is opened, and the holding member 801 is raised to the raised position. The lid unit 91 is held by the holding member 801 and therefore raised with the holding member 801. As a result, the lid unit 91 is separated from the vessel main body 90. The holding member 811 is lowered to the lowered position. The vessel main body 90 is moved to the bean input position. The storage device 4 and the griding device 5 are then activated. This allows roasted coffee beans for a cup of coffee beverage to be supplied to the grinder 5A from the storage device 4. The grinders 5A and 5B grind the roasted coffee beans in two steps, and the separating device 6 separates unwanted matters from the roasted coffee beans. The ground beans are input to the vessel main body 90.

The vessel main body 90 is returned to the extraction position. The holding member 801 is lowered to the lowered position to mount the lid unit 91 onto the vessel main body 90. The lock mechanism 821 is closed to hermetically lock the lid unit 91 onto the vessel main body 90. The holding member 811 is raised to the raised position. Of the valves 903 and 913, the valve 903 is in the open state, and the valve 913 is in the closed state.

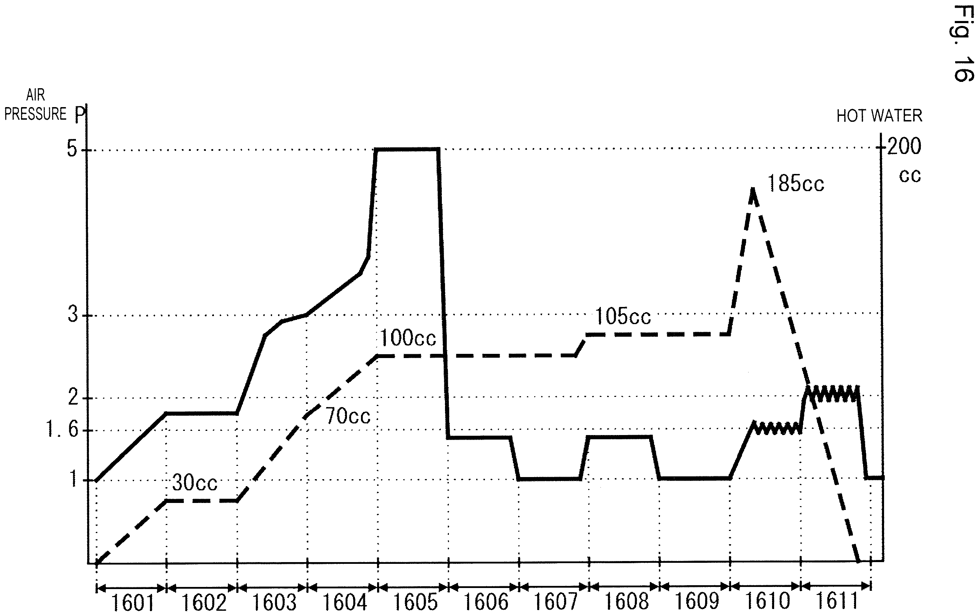

In Step S3, an extraction process is performed. In this example, coffee liquid is extracted from the ground beans in the vessel main body 90. Figure 11(B) is a flowchart showing the extraction process of Step S3. In this embodiment, in the extraction process of Step S3, each hot water pouring operation occurs at a different air pressure in the extraction vessel 9. Figure 16 is a graph showing a variation of the air pressure in the extraction vessel 9 in the extraction process of Step S3. In the following, the extraction process of Step S3 will be described with reference to Figures 15 and 16.

In Step S11, in order to steam the ground beans in the extraction vessel 9, a smaller amount (30 cc, for example) of hot water than the amount of hot water for a cup is poured into the extraction vessel 9. In this example, the solenoid valve 728 is switched to connect the piping 728b and the piping 728c to each other as shown in Figure 15(i) to pour the hot water for steaming into the extraction vessel 9. To this end, the solenoid valve 73b is opened and kept open for a predetermined time and then closed. As a result, as shown in a period 1601 in Figure 16, the air pressure in the extraction vessel 9 is raised from 1 atmosphere to 1.7 atmospheres, for example. After that, the piping 728b and the piping 728c are isolated from each other as shown in Figure 15(j), and the processing of Step S11 is then ended after a predetermined waiting time (15000 ms, for example) as shown by a period 1602 in Figure 16. By this processing, the ground beans can be steamed. By steaming the ground beans, carbonic acid gas can be released from the ground beans, and the subsequent extraction can be more effectively performed. Not that, in Figure 16, the solid line indicates a variation of the air pressure in the extraction vessel 9, and the dashed line indicates a variation of the amount of hot water in the extraction vessel 9. In the period 1601, the air pressure varies as described above, and 30 cc of hot water is supplied. In the period 1602, the amount of hot water remains 30 cc.

In Step S12, the solenoid valve 728 is switched to connect the piping 728b and the piping 728c to each other as shown in Figure 15(k) to pour a predetermined amount (40 cc, for example) of the hot water for a cup into the extraction vessel 9. In this example, the solenoid valve 73b is opened and kept open for a predetermined time and then closed. As a result, as shown in a period 1603 in Figure 16, the air pressure in the extraction vessel 9 is raised from 1.7 atmospheres to 3 atmospheres, for example.

The processing of Step S12 can set the interior of the extraction vessel 9 at a temperature (about 110°C, for example) higher than 100°C. In Step S13, in the state where the piping 728b and the piping 728c are in communication with each other, the remainder (30 cc, for example) of the hot water for a cup is poured into the extraction vessel 9. Furthermore, in Step S13, the interior of the extraction vessel 9 is pressurized. In this example, the solenoid valve 73b is opened and kept open for a predetermined time (1000 ms, for example) and then closed, thereby pressuring the interior of the extraction vessel 9 to an air pressure (about 5 atmospheres (a gauge pressure of about 4 atmospheres), for example) at which the hot water does not boil as shown in a period 1604 in Figure 16. The total of the amount of hot water for steaming poured in the period 1601 in Figure 16, the amount of hot water poured in the period 1603 and the amount of hot water poured in the period 1604 can be adjusted to be a predetermined amount (100 cc, for example). After that, the piping 728b and the piping 728c are isolated from each other, and the valve 903 is then closed. The state shown in Figure 15(l) corresponds to the state at this point, and while the state shown in Figure 15(l) is maintained, the processings of Steps S14 and S15 described below are performed.

In the processing of Step S14, immersion extraction (S141) and chamber decompression (S142) are then performed. After the interior of the extraction vessel 9 is pressurized to 5 atmospheres in Step S13, for example, this state is kept for a predetermined time (1000 ms, for example) as shown in a period 1605 in Figure 16, and after that, the pressure rapidly decreases from 5 atmospheres to 1.5 atmospheres, for example. In this example, the air pressure in the extraction vessel 9 is changed to an air pressure at which the hot water boils. Specifically, the valve 913 is opened, and the solenoid valve 73c is opened and kept open for a predetermined time (1000 ms, for example) and then closed, thereby opening the extraction vessel 9 to the ambient air. After that, the valve 913 is closed again.

The interior of the extraction vessel 9 is rapidly decompressed to an air pressure lower than the bubble point pressure, and the hot water in the extraction vessel 9 rapidly boils. The hot water and the ground beans in the extraction vessel 9 are explosively scattered in the extraction vessel 9. In this way, the hot water can be made to uniformly boil. In addition, destruction of the cell walls of the ground beans can be promoted, and the subsequent extraction of coffee liquid can be further promoted. In addition, the ground beans and the hot water can be agitated by this boiling, and the extraction of coffee liquid can be promoted. In this embodiment, in this way, the efficiency of extraction of coffee liquid can be improved. After the rapid decompression, as shown in a period 1606 in Figure 16, this state is kept for a predetermined time (3000 ms, for example). After that, the solenoid valve 73c is opened and kept open for a predetermined time and then closed, the air pressure is further reduced from 1.5 atmospheres to 1 atmosphere, for example. As shown in a period 1607 in Figure 16, this state is then kept for a predetermined time (1000 ms, for example).

In this embodiment, by the processing of Step S14 described above, immersion extraction of coffee liquid is performed at high temperature and high pressure. The immersion extraction at high temperature and high pressure can have the following advantages. First, the high pressure facilitates penetration of hot water into the ground beans and promotes extraction of coffee liquid. Second, the high temperature promotes extraction of coffee liquid. Third, because of the high temperature, the viscosity of oil in the ground beans decreases, and extraction of the oil is promoted. In this way, a more flavorful coffee beverage can be produced. In addition, in Step S14, the air pressure is reduced in two steps, from 5 atmospheres to 1.5 atmospheres and from 1.5 atmospheres to 1 atmosphere, for example. Therefore, the impact of the pressure variation in the extraction vessel 9 can be reduced compared with a one-step decompression from 5 atmospheres to 1 atmosphere. Therefore, the extraction vessel 9 does not need to be provided with a mechanism for alleviating the impact of the pressure variation, and an increase of the size of the extraction vessel 9 can be avoided.

Although the temperature of the hot water (high-temperature water) can be any temperature higher than 100°C, a higher temperature is more advantageous for extraction of coffee liquid. In general, however, raising the temperature of the hot water leads to an increase of cost. For these reasons, the temperature of the hot water can be set to be equal to or higher than 105°C, 110°C or 115°C and equal to or lower than 130°C or 120°C, for example. The air pressure can be any air pressure at which the hot water does not boil. After the air pressure in the extraction vessel 9 is kept at 1 atmosphere for 1 second in Step S14, the solenoid valve 73b is opened and kept open for a predetermined time and then closed, thereby pressuring the extraction vessel 9 to a predetermined air pressure (1.5 atmospheres, for example). In a period 1607, such pressurization may push any trace amount of liquid (about 5 cc) in the piping in communication with the interior of the extraction vessel 9 into the extraction vessel 9.

In Step S15, the extraction vessel 9 is inverted from the upright posture to the inverted posture. In this example, the holding member 801 is moved to the raised position, and the holding member 811 is moved to the lowered position. The supporting unit 81B is then rotated. The holding member 801 is then returned to the lowered position, and the holding member 811 is returned to the raised position. In the inverted posture, the extraction vessel 9 has the neck part 90b and the lid unit 91 located at the bottom. In the period of Step S15 corresponds to a period 1608 in Figure 16. After the extraction vessel 9 is inverted, the solenoid valve 73c is opened and kept open for a predetermined time and then closed, thereby reducing the air pressure in the extraction vessel 9 to 1 atmosphere. As shown in a period 1609 in Figure 16, this state is kept for a predetermined time (2000 ms, for example). In this embodiment, after the extraction vessel 9 is inverted, hot water is poured into the extraction vessel 9. Specifically, as shown in Figure 15(m), the solenoid valve 728 is switched to connect the piping 728b and the piping 728c to each other to pour a predetermined amount (80 cc, for example) of hot water into the extraction vessel 9.

In Step S16, percolation extraction of coffee liquid is performed, and the coffee beverage is delivered into the cup C. In this example, the switch valve 10a is switched to connect the pouring part 10c to the channel part 810a of the operational unit 81C. The valves 903 and 913 are opened. In this embodiment, in the extraction of coffee liquid in Step S16, the coffee liquid is delivered by the action of vapor and by the action of air from the reserve tank 71. To achieve the delivery of the coffee liquid by the action of vapor, first, after hot water is poured into the extraction vessel 9 inverted (Figure 15(m)), water is supplied to the water tank 72 (Figure 15(n)). After a predetermined waiting time (a period 1609), the interior of the water tank 72 is pressurized from 1 atmosphere to 2.0 atmospheres by means of the relief valve 72e and the solenoid valve 72f. Since the piping 728b and the piping 728c are in communication with each other, the air pressure in the water tank 72 decreases to promote boiling of the water therein as the vapor in the water tank 72 is supplied to the extraction vessel 9. As the vapor is delivered from the tank 720a to the extraction vessel 9, the pressure in the tank 720a decreases. Then, if the temperature has not reached a desired temperature (lower than 118°C, for example), the heater 72a is turned on to boil the hot water in the tank 720a. The vapor thus produced adds to the air pressure in the extraction vessel 9 to about 1.6 atmospheres, and the coffee beverage made of hot water and coffee liquid dissolved in the hot water passes through a filter in the lid unit 91 and is delivered into the cup C. The period of this processing corresponds to a period 1610 in Figure 16. The filter prevents the residue of the ground beans from being delivered. With such a configuration, the water in the water tank 72 boils and is therefore agitated and can have a uniform temperature distribution, and the coffee liquid can be extracted at high temperature. The piping 728b and the piping 728c are then isolated as shown in Figure 15(o).

To achieve the delivery of the coffee liquid under the pressure supplied from the reserve tank 71, the solenoid valve 73b is then opened and kept open for a predetermined time and then closed to set the interior of the extraction vessel 9 at a predetermined air pressure (2.0 atmospheres, for example). As a result, the coffee beverage made of hot water and coffee liquid dissolved in the hot water passes through the filter in the lid unit 91 and is delivered into the cup C. The period of this processing corresponds to a period 1611 in Figure 16. The filter prevents the residue of the ground beans from being delivered. With such a configuration, the coffee beverage is delivered by a plurality of pressure sources. In addition, the coffee beverage is finally delivered by the highest pressure of the pressures of the plurality of pressure sources, the residual coffee beverage in the delivery structure can be reduced.

In this embodiment, the efficiency of extraction of coffee liquid is improved by the combination of the immersion extraction in Step S14 and the percolation extraction in Step S16. When the extraction vessel 9 is in the upright posture, the ground beans are accumulated on the bottom part 90f in the trunk part 90e. When the extraction vessel 9 is in the inverted posture, the ground beans are accumulated in the neck part 90b and the shoulder part 90d. The trunk part 90e has a greater cross-sectional area than the neck part 90b, so that the thickness of the accumulated ground beans is greater in the inverted posture than in the upright posture. That is, the ground beans are accumulated in the extraction vessel 9 to a relatively small thickness over a relatively wide area in the upright posture and accumulated to a relatively great thickness over a relatively narrow area in the inverted posture.

In this embodiment, the immersion extraction in Step S14 is performed with the extraction vessel 9 in the upright posture, so that the hot water and the ground beans can come into contact with each other over a wider area, so that the efficiency of the extraction of coffee liquid can be improved. In the immersion extraction, however, the hot water and the ground beans tend to partially come into contact with each other. On the other hand, the percolation extraction in Step S16 is performed with the extraction vessel 9 in the inverted posture, the hot water passes through the accumulated ground beans while coming into contact with more ground beans. The hot water more uniformly comes into contact with the ground beans, so that the efficiency of the extraction of coffee liquid can be further improved.

Referring back to Figure 11(A), after the extraction processing in Step S3, a discharge processing is performed in Step S4. In this example, a processing relating to cleaning of the interior of the extraction vessel 9 is performed. The cleaning of the extraction vessel 9 is performed by returning the extraction vessel 9 from the inverted posture to the upright posture and then supplying water (purified water) to the extraction vessel 9. The interior of the extraction vessel 9 is then pressurized to discharge the water in the extraction vessel 9 and the residue of the ground beans to the waste tank T.

This is the end of one coffee beverage production process. After that, the same process is repeated each time a production command occurs. The time required for one coffee beverage production is about 60 to 90 seconds, for example.

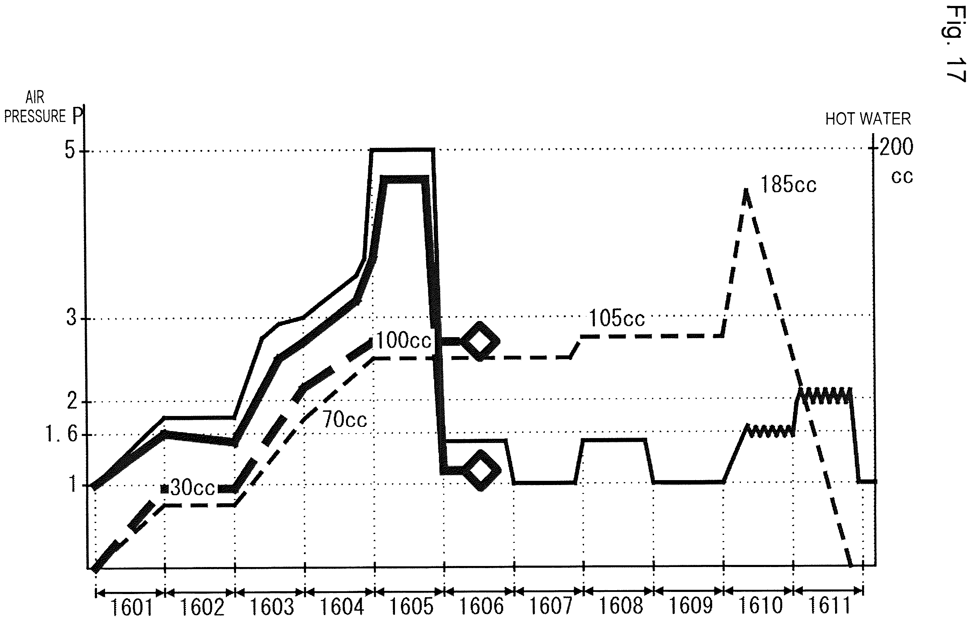

Figure 17 is a diagram showing an example of a display of the information in Figure 16 on the information display device 12. Figure 17 shows an example of a display of the result of actual measurement of the pressure and the amount of hot water in the extraction vessel 9 during extraction being plotted in real time as the extraction proceeds. In Figure 17, the thin solid line indicates a desired variation of the pressure in the extraction vessel 9 when brewing a cup of coffee (a pressure variation graph), and the thin dashed line indicates a desired variation of the amount of hot water in the extraction vessel 9 when brewing a cup of coffee (a liquid amount variation graph). The thick solid line is a real-time plot of the variation of the pressure in the extraction vessel 9, which varies in real time during actual brewing of coffee, and the thick dashed line is a real-time plot of the variation of the amount of hot water in the extraction vessel 9, which varies in real time during actual brewing of coffee. The pressure and the amount of hot water in the extraction vessel 9 may be obtained by measurement with a pressure sensor and a water level sensor provided in the extraction vessel 9 or may be obtained based on measurements obtained by the pressure sensor 72g and the water level sensor 72c.

Figure 17 shows a plot from the period 1601 to a midpoint in the period 1606, which means that the current extraction process has proceeded to a midpoint in the period 1606, at which the pressure in the extraction vessel 9 is 1.2 atmospheres and the amount of hot water in the extraction vessel 9 is 100 cc. As the extraction process proceeds from the midpoint in the period 1606, actual measurements of the pressure and the amount of hot water in the extraction vessel 9 are plotted and displayed in succession. Figure 17 also shows that the desired pressure and the desired amount of hot water are not reached in each period because of a malfunction of any of the valves or a leakage of hot water or pressure from any channel or the extraction vessel 9, for example. That is, the display in Figure 17 allows the user to compare the actual values with desired values.

Figure 17 shows a desired variation of the pressure in the extraction vessel 9, a desired variation of the amount of hot water in the extraction vessel 9, a variation of the measured pressure in the extraction vessel 9, and a variation of the measured amount of hot water in the extraction vessel 9. Alternatively, however, only a desired variation of the pressure in the extraction vessel 9 and a variation of the measured pressure in the extraction vessel 9 may be displayed. Alternatively, only a desired variation of the amount of hot water in the extraction vessel 9 and a variation of the measured amount of hot water in the extraction vessel 9 may be displayed.

In Figure 17, the periods 1601 to 1611 have the same length. However, in the graph displayed on the information display device 12, each period may have a length corresponding to the actual duration thereof. The periods 1601 to 1611 described above may be regarded as steps. For example, the periods 1601 to 1611 may be regarded as a step of pouring hot water for steaming, a steaming step, a first pouring step, a pressurization step, a step of rapid decompression after immersion at high pressure (a first pressure releasing step), a step of rapid decompression after a waiting state (a second pressure releasing step), a first waiting step, a vessel posture changing step (a vessel inversion step), a second waiting step, a first beverage delivery step, and a second beverage delivery step, respectively, for example.

A plurality of patterns of the graph in Figure 16, which shows the pressure and the amount of hot water in the extraction vessel 9 and the length of each period, may be stored in advance and may be displayed so that the user (such as a shop staff member or a customer) can select a preferred pattern and brew a cup of coffee by adjusting the pressure and the amount of hot water in the extraction vessel 9 and the length of each period to the selected pattern.

The desired variation of the pressure in the extraction vessel 9, the desired variation of the amount of hot water in the extraction vessel 9, the variation of the measured pressure in the extraction vessel 9, and the variation of the measured amount of hot water in the extraction vessel 9 shown in Figure 17 may be displayed for the entire duration of the brewing of a cup of coffee, the desired variation of the pressure in the extraction vessel 9, and the desired variation of the amount of hot water in the extraction vessel 9, the variation of the measured pressure in the extraction vessel 9, and the variation of the measured amount of hot water in the extraction vessel 9 may be stored in storage means and may be displayed again in response to a user operation on the manipulation part of the information display device 12 or the like.

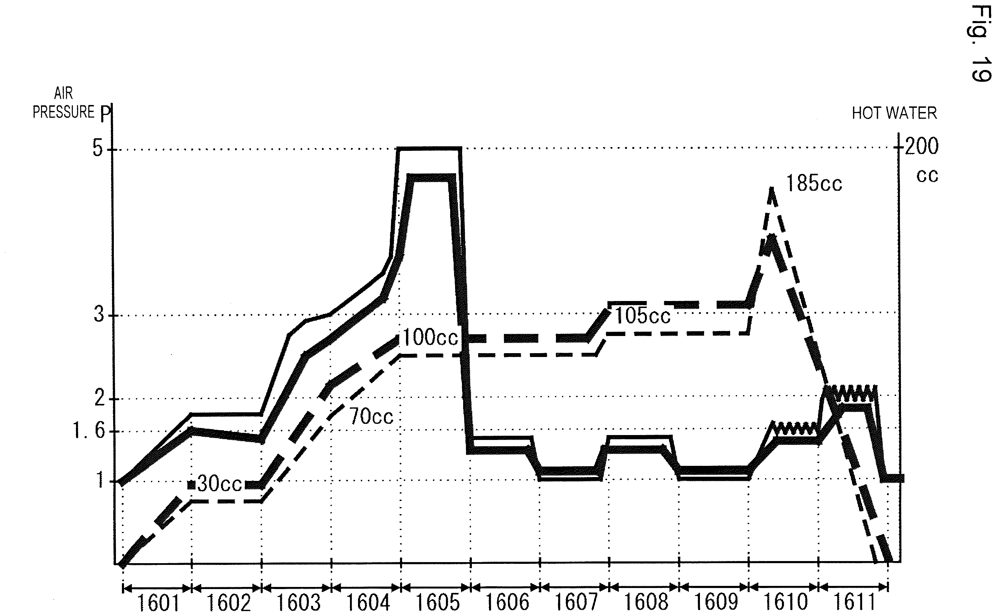

Figure 19 shows a display of the plot in Figure 17 completed to the period 1611. That is, as shown in Figure 19, the desired variation of the pressure in the extraction vessel 9 (pressure information), the desired variation of the amount of hot water in the extraction vessel 9 (liquid amount information), the variation of the measured pressure in the extraction vessel 9 (pressure information), and the variation of the measured amount of hot water in the extraction vessel 9 (liquid amount information) are displayed for the entire duration of the brewing of a cup of coffee and stored in storage means (the storage part 11b, for example). Furthermore, these pieces of information may be displayed again in response to a user operation on the manipulation part of the information display device 12. Such a configuration can allow the user to modify the recipe for a coffee by changing the taste or flavor of the coffee based on the actual taste of the brewed coffee and the graph displayed on the information processing device 12, such as the graph shown in Figure 19.

In this embodiment, on the screen showing the information in Figure 16 displayed on the information display device 12, the user can adjust the duration of each period (each step) and the desired values of the pressure and the amount of hot water through a touch operation on the graph.

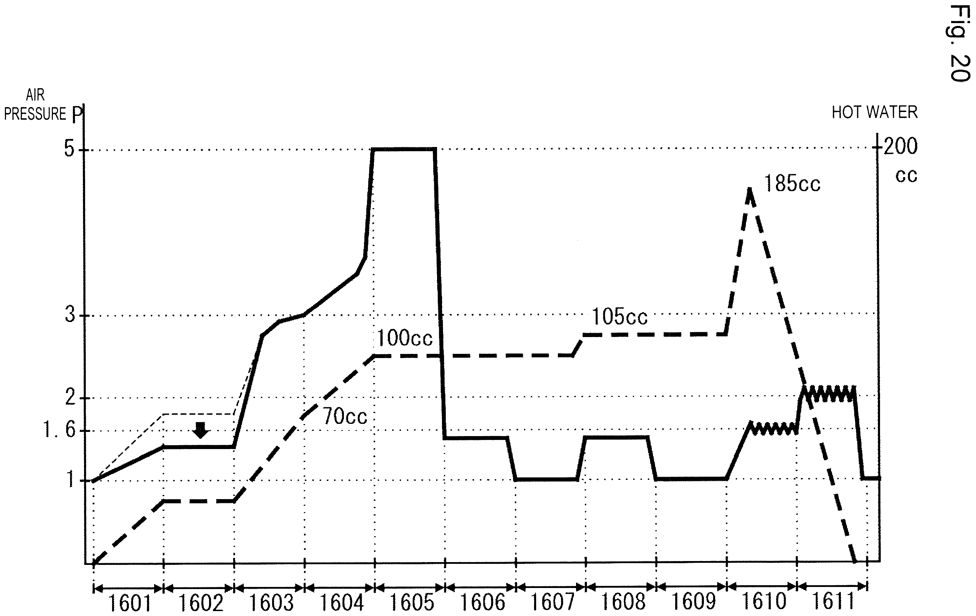

Figure 20 is a diagram showing the screen shown in Figure 16 in which the user has adjusted the desired value of the pressure in the period 1602 (steaming step). In Figure 20, when the user touches the part of the period 1602 in the graph the user wants to adjust and flicks the screen down, the processing part 11a controls the information display device 12 to reflect the operation by modifying and displaying the desired value of the pressure in the period 1602 from 1.8 atmospheres to 1.5 atmospheres.

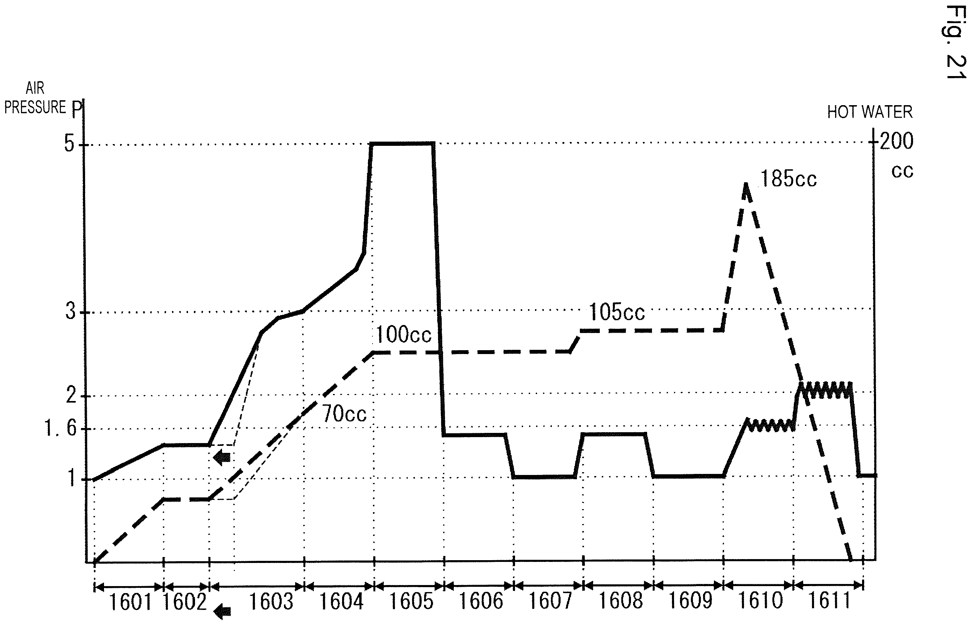

Figure 21 is a diagram showing the screen shown in Figure 16 in which the user has adjusted the duration of the period 1602. In Figure 21, when the user touches the part of the period 1602 the user wants to adjust and flicks the screen to the left, the processing part 11a controls the information display device 12 to reflect the operation by modifying and displaying the duration of the period 1602 from 15 seconds to 10 seconds. As shown in figure 21, when the duration of the period 1602 is adjusted, the graphs of the pressure and the amount of hot water in the adjacent period are also accordingly adjusted. By adjusting the duration in this way, the rate of increase of the pressure and the amount of hot water can be modified.

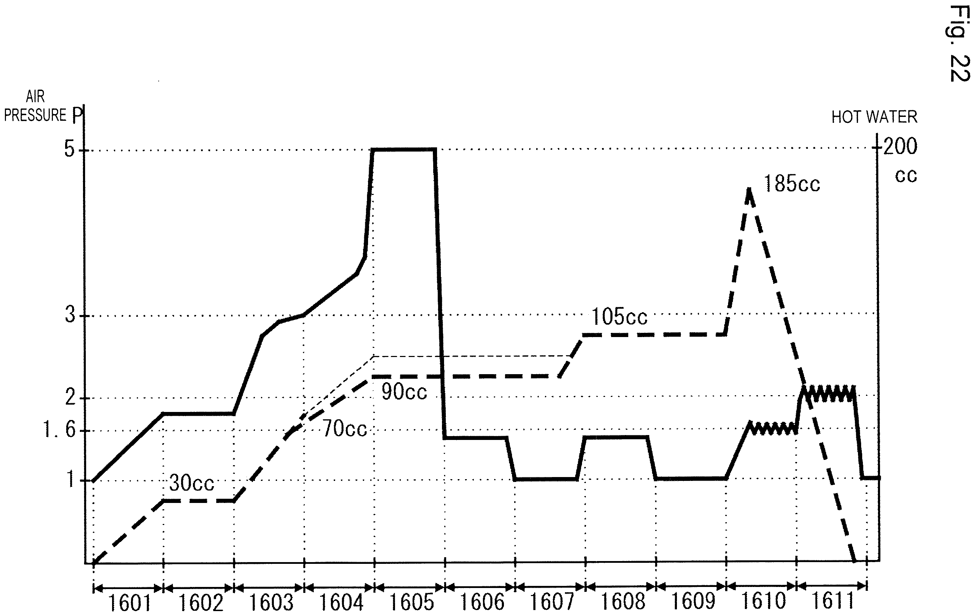

Figure 22 is a diagram showing the screen shown in Figure 16 in which the user has adjusted the desired value of the amount of hot water in the period 1605 (a step of immersion at high pressure). In Figure 22, when the user touches the part of the period 1605 the user wants to adjust and flicks the screen down, the processing part 11a controls the information display device 12 to reflect the operation by modifying and displaying the amount of hot water in the period 1605 from 100 cc to 90 cc.

Figures 20 to 22 have been described on the supposition that the user adjusts the desired value of the pressure or the amount of hot water. However, the user can also adjust the measured value of the pressure or the amount of hot water. Furthermore, the user may be able to adjust at least any of the desired values of the pressure and the amount of hot water, the measured values of the pressure and the amount of hot water, and the durations of the periods on the screen shown in Figure 19.

In this embodiment, as shown in Figure 19, the measured values of the pressure in the extraction vessel 9 and the amount of hot water in the extraction vessel 9 are plotted and displayed on the information display device 12 in real time. Other measured values than those of the pressure and the amount of hot water described above, such as measured values of the temperature of the hot water, may be plotted and displayed on the information display device 12 in real time.

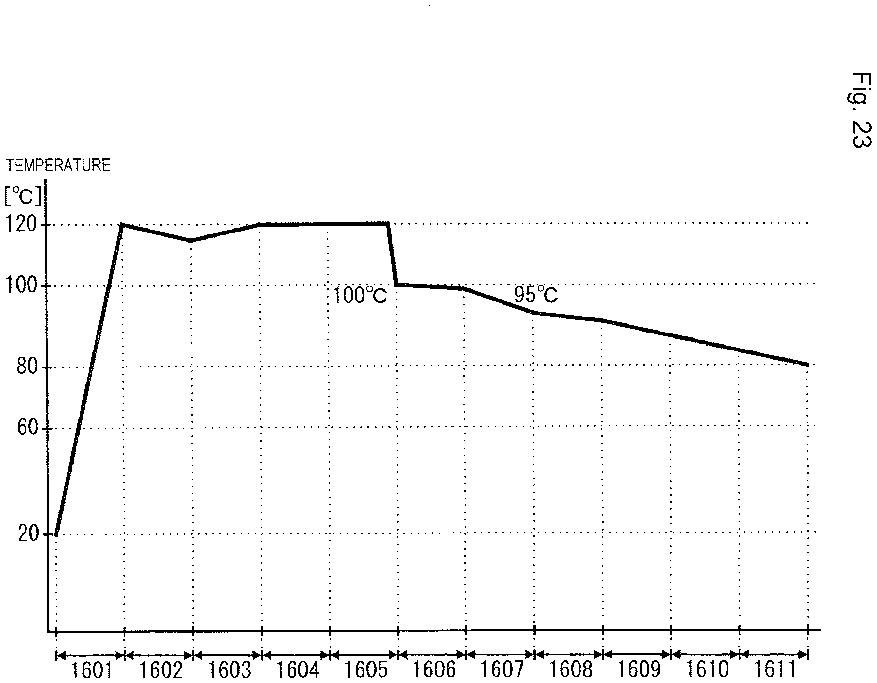

Figure 23 is a diagram showing a display of a plot of the temperature of the hot water in the extraction vessel 9 completed to the period 1611 (a temperature variation graph). When the display of the plot to the period 1611 is completed, the processing part 11a stores the variation of the measured temperature of the hot water in the extraction vessel 9 (temperature information) in storage means. The temperature information may be displayed again in response to a user operation (a touch operation on the touch screen, for example) on the manipulation part of the information display device 12. The temperature of the hot water in the extraction vessel 9 may be measured by a temperature sensor (an example of temperature determination means) provided in the extraction vessel 9 or may be obtained based on the measurements from the temperature sensor 72b. If the temperature information can be displayed again in response to an user operation on the manipulation part of the information display device 12, the user can modify the recipe for a coffee by changing the taste or flavor of the coffee based on the taste of the brewed coffee and the graph displayed on the information processing device 12, such as the graph shown in Figure 23. Alternatively, the user may be able to adjust at least any of the temperature of the hot water and the durations of the periods by a flick operation or the like on the screen shown in Figure 23.

Not only the temperature of the hot water but also the temperature of the air in the extraction vessel 9 or the pressure of the hot water in the extraction vessel 9 may be measured. For example, a temperature sensor or a pressure sensor (an example of pressure determination means) may be provided in the extraction vessel 9, and the measurements from the element may be plotted and displayed on the information display device 12 in real time. Furthermore, at least any of the pressure, the amount of the hot water and the temperature of the hot water in the piping from the liquid delivery amount adjusting device 720 or the extraction vessel 9 to the delivery port (pouring port) of the coffee beverage into the cup C and the pressure, the amount of the hot water and the temperature of the hot water at the delivery port may be able to be measured, and the measurements may be plotted and displayed on the information display device 12 in real time.

As other parameters, desired values of the grind size of the grinder 5A, the grind size of the grinder 5B, the degree of separation of chaff and the like may be displayed on the information display device 12. For example, a sensor for measuring the size of ground beans is provided at a part through which the ground beans freely falling from the grinder 5A or 5B pass so that measurements of the grind size can be obtained. Furthermore, the measurements may be stored in storage means and displayed again in response to a user operation on the manipulation part of the information display device 12.

When an adjustment is made by the user on the screen shown in any of Figures 19 to 23, and a coffee beverage production command is issued, the processing part 11a controls the various actuators (motors, solenoid valves and heaters, for example) provided in the beverage making apparatus 1 based on the adjustment to perform the process shown in Figure 11(A). The temperature of the hot water is adjusted by supplying water to the hot water at 120°C in the storage part 725 of the liquid delivery amount adjusting device 720, for example.

In this embodiment, the time from the start of the extraction and the actual measurements of the pressures at different points (points in the extraction vessel 9, for example) are displayed in the form of a pressure measurement graph, as an example. Alternatively, however, the time from the start of the extraction and variations of the intensity of different taste factors may be displayed in the form of a graph. For example, the pressure in the extraction vessel 9 may be measured, and the level of the intensity of the sour taste (sour taste level) may be estimated from the measurement. The variation of the sour taste level from the start of the extraction to the completion of the extraction may be then represented by a graph, and a taste estimation graph may be displayed.

Alternatively, the time from the start of the extraction, a desired value of a taste factor based on the setting of the taste factor, and a measured, predicted, calculated or estimated value of the taste factor may be displayed. For example, it is supposed that the extraction is set to complete in 70 seconds from the start of the extraction, and the variation of the temperature of the hot water, the variation of the pressure and the addition of hot water or water are controlled to raise the sour taste level to a level 10 in such a manner that the sour taste level is raised to a level 5 in 20 seconds from the start of the extraction, raised to a level 8 in the subsequent 20 seconds, and then raised to the level 10 in the remaining 30 seconds. Then, the graph showing the variation of the sour taste level may be displayed as a graph of a desired value of the taste factor. As with the pressure illustrated above, a graph of the desired value of the taste factor may be displayed, and a graph of an estimated value of the taste factor may be displayed in real time during the extraction by overlapping the graph of the estimated value of the taste factor on the graph of the desired value of the taste factor. Although the estimated value of the taste factor has been described above as being determined based on the measurement of the pressure, the estimated value of the taste may be determined based on measurements of the temperature of the hot water, the amount of the added hot water or cold water, the way of moving the extraction vessel 9, or the grind size, aroma or color of the beans or the like, or may be measured with a taste sensor.

As an example of the taste factors, the sour taste has been described above. However, any taste factor, such as bitterness, sweetness, richness, freshness, pleasant savory taste, or saltiness, may be displayed. Not only a graph of a taste factor but also a graph of the estimated value or measurement of the intensity of aroma may be displayed. Not only a graph of the desired or estimated value or measurement of one taste factor but also graphs of the desired or estimated value or measurement of the intensity of a plurality of taste factors may be displayed. Furthermore, a taste chart indicating the balance of a plurality of taste factors may be displayed, and the taste chart may be changed to show the user a change of the balance of the plurality of taste factors in the extraction process.

Figure 20 shows an example in which the user flicks or otherwise manipulates the screen at the part of the period in the graph the user wants to adjust to change the desired value of the pressure in the period. The same holds true for the graph of the desired value of a taste factor, and the user may flick or otherwise manipulate the screen at the part of the period in the graph the user wants to adjust to change the desired value of the intensity of a taste factor in the period. The description of Figure 21 holds true for the graph of the desired value of a taste factor, and the user may adjust the duration of the period the user wants to adjust to change the desired value of the intensity of a taste factor in the period.

Figure 20 shows an example in which the user flicks or otherwise manipulates the screen at the part of the period in the graph the user wants to adjust to change the desired value of the pressure in the period. Furthermore, a change of the brewed beverage (coffee) caused by the change may be displayed. For example, along with the graph of the desired value of the pressure such as that shown in Figure 20, a taste chart may be displayed which indicates the balance of a plurality of taste factors of the beverage brewed in the case where the displayed pressure change is made in the extraction process. Then, when the user flicks or otherwise manipulates the screen at the part of the period in the graph the user wants to adjust, the change of the desired value of the pressure in the period may be displayed, and the taste chart may be changed to show the user how the balance of the plurality of taste factors will change as a result of the change of the desired value of the pressure. In this process, the displayed taste chart may change as the line of the desired value of the pressure in the graph changes in response to the flick operation by the user. The plurality of taste factors may include any taste factor, such as sour taste, bitterness, sweetness, richness, freshness, pleasant savory taste and saltiness. The plurality of taste factors are not limited to the taste factors but may include the intensity of aroma. The change of the balance of the taste factors may be displayed not only in association with the change of the desired value of the pressure but also in association with the change of the amount of the hot water such as that shown in Figure 22, the temperature of the hot water such as that shown in Figure 23, the change of the amount of the added hot or cold water, or the change of the length of the period of a step in the extraction process such as that shown in Figure 21.

With reference to Figures 19 to 23, a configuration for displaying information in the form of a graph on the information display device 12 has been described. However, the manner of displaying information is not limited to a graph, and information may be displayed in other manners.

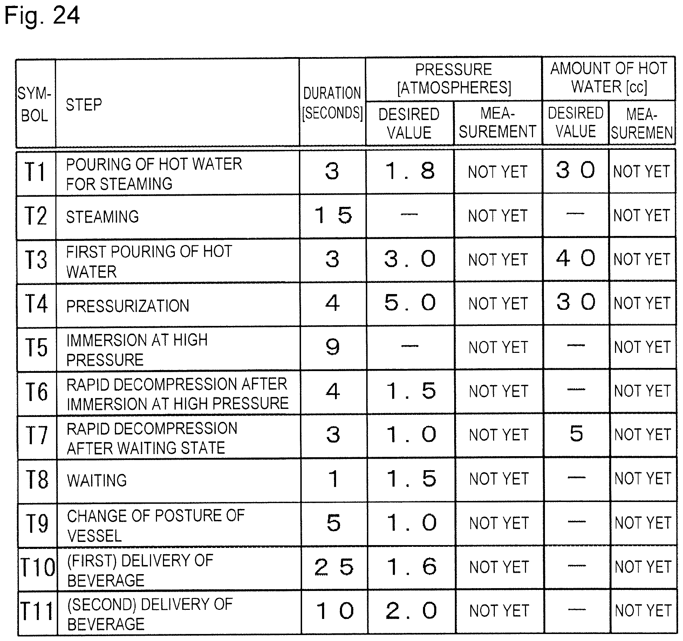

Figure 24 is a diagram showing an example of information displayed in the form of a table, instead of a graph shown in Figure 16. In Figure 24, T1 to T11 correspond to the periods 1601 to 1611. As shown in Figure 24, a desired value in each period (step) is displayed as a numerical value. In Figure 24, no measurement is performed yet, and therefore the fields "measurement" are filled in with "not yet". The table shown in Figure 24 may be displayed in such a manner that the user can edit each numerical value. With such a configuration, a change of a desired value similar to that described above with reference to Figures 20 to 22 can be made in the table shown in Figure 24. A change of a desired value in the table shown in Figure 24 is registered with the beverage making apparatus 1 as a recipe, and as described above, when a coffee beverage production command is issued, the processing part 11a controls the various actuators (motors, solenoid valves and heaters, for example) provided in the beverage making apparatus 1 based on the adjustment to perform the process shown in Figure 11(A).

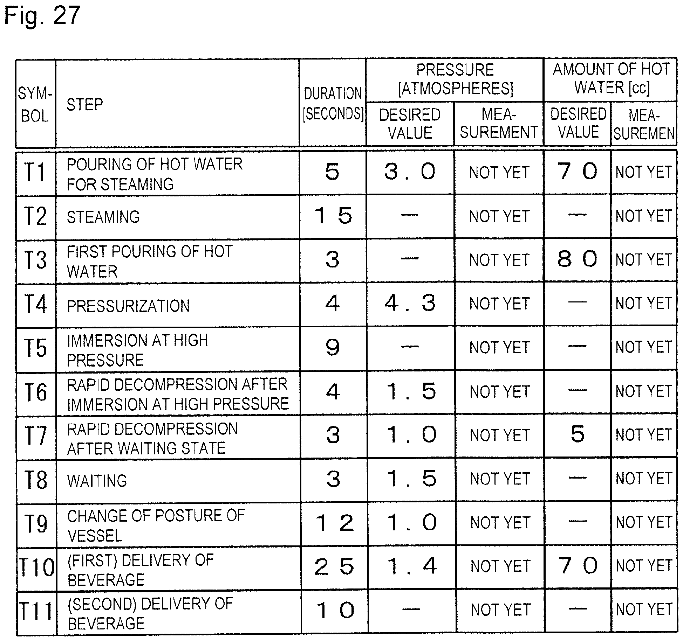

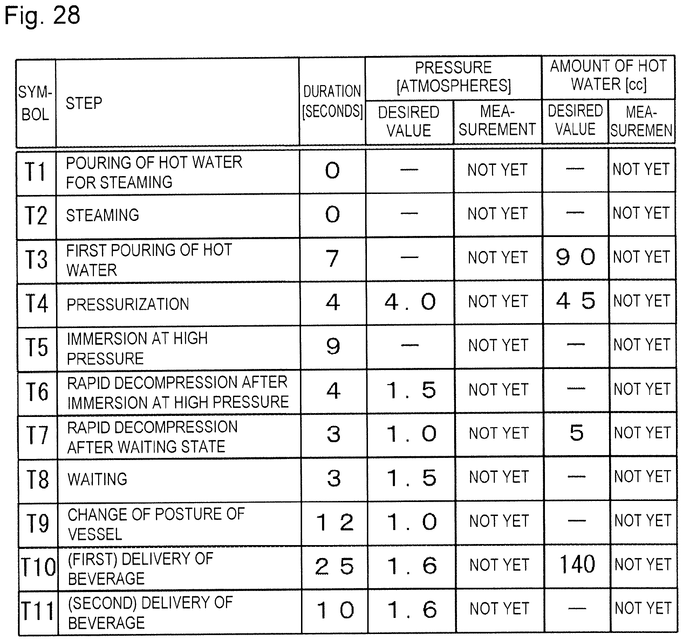

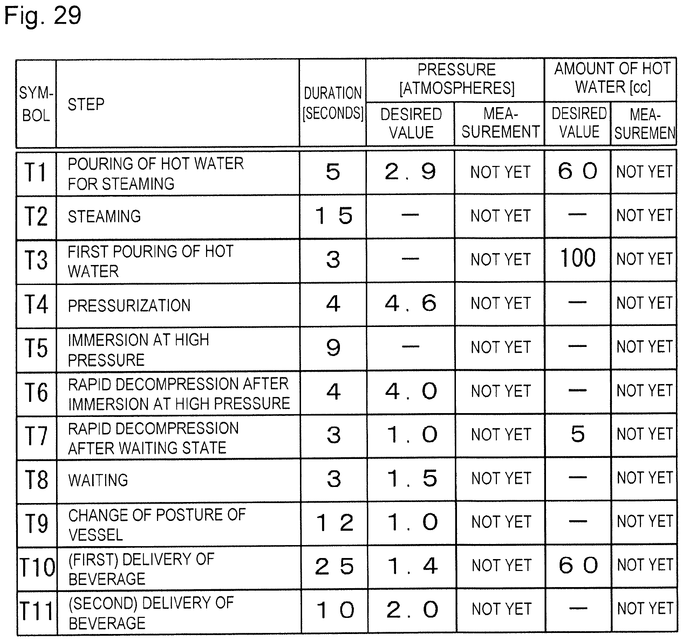

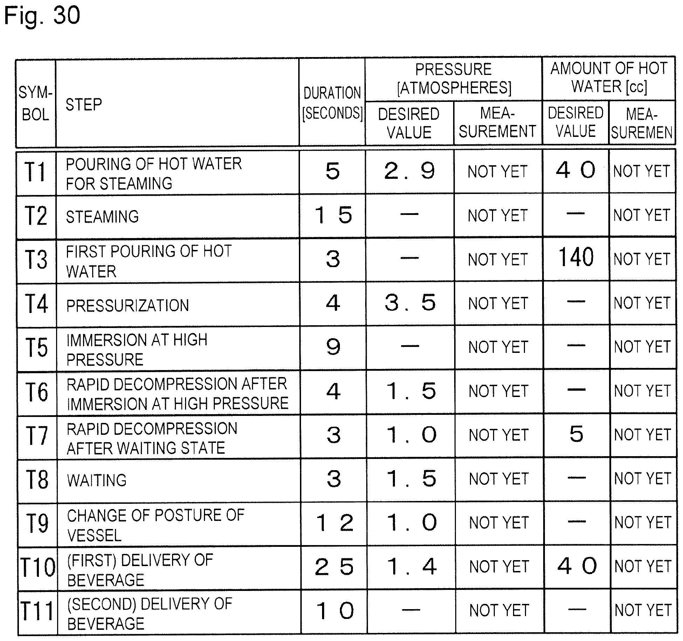

Figures 27, 28, 29 and 30 are diagrams showing examples of registered recipes. Figure 27 shows an example of a registered recipe in which the default desired values shown in Figure 24 are adjusted by the user so that the pressure in the extraction becomes lower. Figure 28 shows an example of a registered recipe in which the steaming step is omitted by the user and the default desired values shown in Figure 24 are accordingly adjusted. Figure 29 shows an example of a registered recipe in which the default desired values shown in Figure 24 are adjusted by the user so that the extent of the decompression after the immersion at high pressure becomes smaller. Figure 30 shows an example of a registered recipe in which the default desired values shown in Figure 24 are adjusted by the user so that the pressure in the immersion at high pressure becomes higher. In this way, various recipes can be registered based on the table displayed as shown in Figure 24.

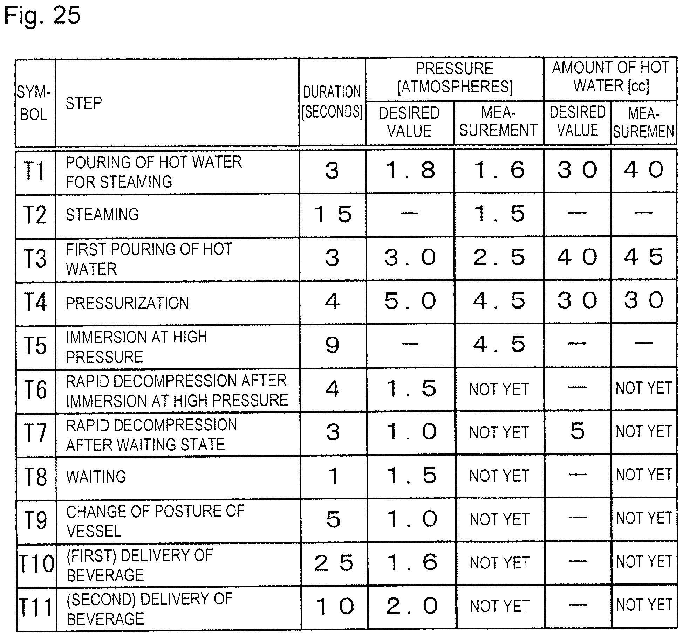

Figure 25 is a diagram showing an example of the measurements in Figure 17 displayed in the form of a table, instead of the form of a graph. In Figure 25, T1 to T11 correspond to the periods 1601 to 1611. As shown in Figure 25, a desired value in each period (step) is displayed as a numerical value. Furthermore, as shown in Figure 25, measurements of the pressure and the amount of hot water are displayed in the respective fields as the measurements are obtained.

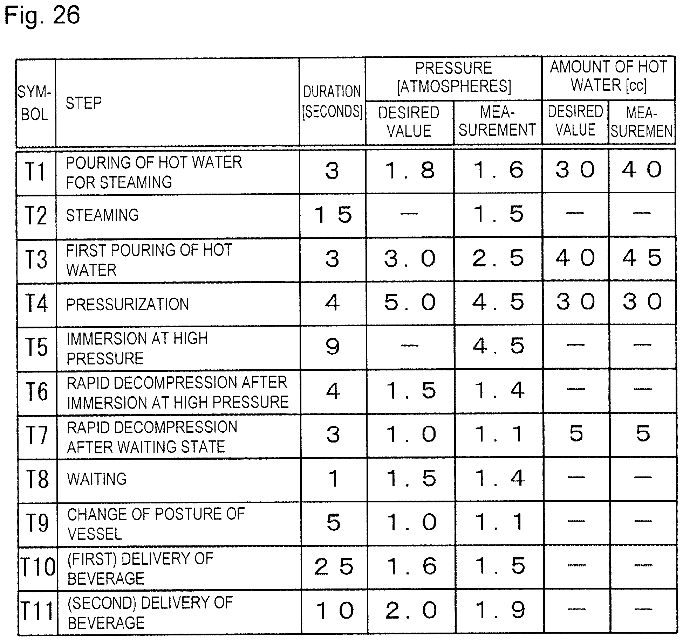

Figure 26 is a diagram showing an example of the measurements in Figure 19 displayed in the form of a table, instead of the form of a graph. As shown in Figure 26, measurements of the pressure and the amount of hot water obtained are displayed for the entire duration of the brewing of a cup of coffee. The measurements displayed as shown in figure 26 may be stored in storage means and displayed again in response to a user operation on the manipulation part of the information display device 12. When the measurements are displayed again, the display mode, such as a graph or a table, may be selected by a user operation. Although Figures 24 to 26 show desired values and measurements of the pressure and the amount of hot water, desired values and measurements of other parameters, such as the temperature of hot water described earlier, may be displayed, and the desired values and measurements may be able to be edited by the user.

The screens shown in Figures 17 and 19 to 30 have been described above as being displayed on the information display device 12. However, the screens may not be displayed on the information display device 12 but may be displayed on an apparatus other than the beverage making apparatus 1. For example, the mobile terminal 17 shown in Figure 10 may display the screens shown in Figures 17 and 19 to 30. In the latter case, the processing part 11a transmits data (a HTML file, for example) required for displaying the screens shown in Figures 17 and 19 to 30 to the mobile terminal 17 in the system over the communication network 15. The mobile terminal 17 may not only display the screens shown in Figures 17 and 19 to 30 but also allow the user to change the displayed graph to reflect a user operation or edit a desired value or measurement in the displayed table as described above. With such a configuration, the following case is possible, for example. That is, the user modifies a recipe registered with the beverage making apparatus 1 on the mobile terminal 17 of the user, and places an order by transmitting the modification of the recipe to the beverage making apparatus 1. After the beverage is provided, a shop staff member improves the recipe on the information display device 12 and transmits the improved recipe to the mobile terminal 17. In this case, the user can edit or otherwise modify a recipe on the mobile terminal 17 of the user with which the user is familiar, so that the convenience can be improved. In addition, the user can obtain the recipe improved by a shop staff member.

### <Summary of Embodiments>

An extraction device according to the embodiment described above includes: an extraction vessel (extraction vessel 9) for extracting an extract from an ingredient; supply means (Figure 3) for supplying a liquid to the extraction vessel; control means (liquid delivery amount adjusting device 720) for controlling the supply of the liquid by the supply means; and display means (information display device 12) for displaying a state in the extraction vessel when the extract is extracted under the control of the control means. The state in the extraction vessel is a liquid amount in the extraction vessel, and the display means displays a variation of the liquid amount in the extraction vessel in the form of a liquid amount variation graph when the extract is extracted.

With such a configuration, when an extract is extracted, a variation of the liquid amount in the extraction vessel can be displayed, for example.

The supply means is configured to be capable of performing a plurality of extraction steps in succession when the extract is extracted, the extraction device further includes storage means (storage part 11b) for storing the liquid amount in the extraction vessel in each of the plurality of extraction steps as liquid amount information, and the display means displays the liquid amount variation graph based on the liquid amount information read from the storage means.

With such a configuration, the user can modify a recipe by referring to the read liquid amount variation graph, for example.

The display means displays, in response to a user operation, the liquid amount variation graph by reflecting the operation in the manner of the variation of the liquid amount indicated by a part of the liquid amount variation graph, the storage means newly stores liquid amount information corresponding to the liquid amount variation graph in which the operation is reflected, and the control means reads the liquid amount information newly stored in the storage means, and performs a control so that the liquid amount in the extraction vessel in each of the plurality of extraction steps is a liquid amount corresponding to the read liquid amount information. The extraction device further includes liquid amount determination means for determining the liquid amount in the extraction vessel, and the display means displays the liquid amount variation graph based on the liquid amount determined by the liquid amount determination means.

With such a configuration, the user can modify the displayed measured liquid amount variation graph by a flick operation or the like, for example.

The supply means is capable of supplying an air pressure to the extraction vessel, the state in the extraction vessel is the air pressure in the extraction vessel, and the display means displays a variation of the air pressure in the extraction vessel in the form of a pressure variation graph when the extract is extracted. The storage means is capable of storing the air pressure in the extraction vessel in each of the plurality of extraction steps as pressure information, and the display means displays the pressure variation graph based on the pressure information read from the storage means.

With such a configuration, the user can modify a recipe by referring to the read pressure variation graph, for example.

The display means displays, in response to a user operation, the pressure variation graph by reflecting the operation in the manner of the variation of the pressure indicated by a part of the pressure variation graph, the storage means newly stores pressure information corresponding to the pressure variation graph in which the operation is reflected, and the control means reads the pressure information newly stored in the storage means, and performs a control so that the air pressure in the extraction vessel in each of the plurality of extraction steps is an air pressure corresponding to the read pressure information. The extraction device further includes pressure determination means for determining the air pressure in the extraction vessel, and the display means displays the pressure variation graph based on the air pressure determined by the pressure determination means.

With such a configuration, the user can modify the displayed measured pressure variation graph by a flick operation or the like, for example.

The display means is capable of displaying the liquid amount variation graph and the pressure variation graph in one screen. With such a configuration, the liquid amount variation graph and the pressure variation graph can be displayed in one screen.

The state in the extraction vessel is a temperature of hot water in the extraction vessel, and the display means displays a variation of the temperature of hot water in the extraction vessel in the form of a temperature variation graph when the extract is extracted. The storage means is capable of storing the temperature of hot water in the extraction vessel in each of the plurality of extraction steps as temperature information, and the display means displays the temperature variation graph based on the temperature information read from the storage means.

With such a configuration, the user can modify a recipe by referring to the read temperature variation graph, for example.

The display means displays, in response to a user operation, the temperature variation graph by reflecting the operation in the manner of the variation of the temperature indicated by a part of the temperature variation graph, the storage means newly stores temperature information corresponding to the temperature variation graph in which the operation is reflected, and the control means reads the temperature information newly stored in the storage means, and performs a control so that the temperature of hot water in the extraction vessel in each of the plurality of extraction steps is a temperature of hot water corresponding to the read temperature information. The extraction device further includes temperature determination means for determining the temperature of hot water in the extraction vessel, and the display means displays the temperature variation graph based on the air pressure determined by the temperature determination means.

With such a configuration, the user can modify the displayed measured temperature variation graph by a flick operation or the like, for example.

The display means is capable of displaying the liquid amount variation graph, the pressure variation graph and the temperature variation graph in one screen. With such a configuration, the liquid amount variation graph, the pressure variation graph and the temperature variation graph can be displayed in one screen.

### Reference Signs List

- 1: beverage making apparatus
- 9: extraction vessel
- 71: reserve tank
- 72: water tank
- 720: liquid delivery amount adjusting device
- 727: drive unit
- 72f, 72h, 73c, 73b, 728: solenoid valve

## Claims

1. An extraction device (3), comprising:
an extraction vessel (9) for extracting an extract from an ingredient;
supply means (7) for supplying a liquid to the extraction vessel (9), wherein the supply means (7) is configured to be capable of performing a plurality of extraction steps in succession when the extract is extracted;
control means (11) for controlling the supply of the liquid by the supply means (7);
storage means (11b) for storing a liquid amount in the extraction vessel (9) in each of the plurality of extraction steps as liquid amount information; and
display means (12) for displaying a state in the extraction vessel (9) in the form of a liquid amount variation graph when the extract is extracted under the control of the control means (11), wherein the state is a variation of the liquid amount,
the display means (12) displays the liquid amount variation graph based on the liquid amount information read from the storage means (11b),
the display means (12) displays, in response to a user operation, the liquid amount variation graph by reflecting the operation of the user by modifying and displaying the variation of the liquid amount indicated by a part of the liquid amount variation graph,
the storage means (11b) newly stores liquid amount information corresponding to the liquid amount variation graph in which the operation is reflected, and
the control means (11) reads the liquid amount information newly stored in the storage means (11b), and performs a control so that the liquid amount in the extraction vessel (9) in each of the plurality of extraction steps is a liquid amount corresponding to the read liquid amount information,
wherein the extraction device (3) further comprises liquid amount determination means for determining the liquid amount in the extraction vessel (9), and the display means (12) displays the liquid amount variation graph based on the liquid amount determined by the liquid amount determination means.

2. The extraction device (3) according to Claim 1, wherein the supply means (7) is capable of supplying an air pressure to the extraction vessel (9),
the state in the extraction vessel (9) is the air pressure in the extraction vessel (9), and
the display means (12) displays a variation of the air pressure in the extraction vessel (9) in the form of a pressure variation graph when the extract is extracted.

3. The extraction device (3) according to Claim 2, wherein the storage means (11b) is capable of storing the air pressure in the extraction vessel (9) in each of the plurality of extraction steps as pressure information, and
the display means (12) displays the pressure variation graph based on the pressure information read from the storage means (11b).

4. The extraction device (3) according to Claim 3, wherein the display means (12) displays, in response to a user operation, the pressure variation graph by reflecting the operation of the user by modifying and displaying the variation of the pressure indicated by a part of the pressure variation graph,
the storage means (11b) newly stores pressure information corresponding to the pressure variation graph in which the operation is reflected, and
the control means (11) reads the pressure information newly stored in the storage means (11b), and performs a control so that the air pressure in the extraction vessel (9) in each of the plurality of extraction steps is an air pressure corresponding to the read pressure information.

5. The extraction device (3) according to any one of Claims 2 to 4, wherein the display means (12) is capable of displaying the liquid amount variation graph and the pressure variation graph in one screen.

6. The extraction device (3) according to any one of Claims 2 to 5, wherein the state in the extraction vessel (9) is a temperature of hot water in the extraction vessel (9), and
the display means (12) displays a variation of the temperature of hot water in the extraction vessel (9) in the form of a temperature variation graph when the extract is extracted.

7. The extraction device (3) according to Claim 6, wherein the storage means (11b) is capable of storing the temperature of hot water in the extraction vessel (9) in each of the plurality of extraction steps as temperature information, and
the display means (12) displays the temperature variation graph based on the temperature information read from the storage means (11b).

8. The extraction device (3) according to Claim 7, wherein the display means (12) displays, in response to a user operation, the temperature variation graph by reflecting the operation of the user by modifying and displaying the variation of the temperature indicated by a part of the temperature variation graph,
the storage means (11b) newly stores temperature information corresponding to the temperature variation graph in which the operation is reflected, and
the control means (11) reads the temperature information newly stored in the storage means (11b), and performs a control so that the temperature of hot water in the extraction vessel (9) in each of the plurality of extraction steps is a temperature of hot water corresponding to the read temperature information.

9. The extraction device (3) according to any one of Claims 6 to 8, wherein the display means (12) is capable of displaying the liquid amount variation graph, the pressure variation graph and the temperature variation graph in one screen.

10. A display method performed by an extraction device (3), comprising:
a supply step of supplying a liquid to an extraction vessel (9) for extracting an extract from an ingredient, wherein a plurality of extraction steps can be performed in succession when the extract is extracted;
a control step of controlling the supply of the liquid in the supply step;
a storage step of storing a liquid amount in the extraction vessel (9) in each of the plurality of extraction steps as liquid amount information; and
a display step of displaying a variation of the liquid amount in the extraction vessel (9) in the form of a liquid amount variation graph when the extract is extracted under the control of the control step,
in the display step, the liquid amount variation graph is displayed based on the liquid amount information stored in the storage step,
in the display step, in response to a user operation, the liquid amount variation graph is displayed by reflecting the operation of the user by modifying and displaying the variation of the liquid amount indicated by a part of the liquid amount variation graph,
in the storage step, liquid amount information corresponding to the liquid amount variation graph in which the operation is reflected is newly stored, and
in the control step, the liquid amount information newly stored in the storage step is read, and a control is performed so that the liquid amount in the extraction vessel (9) in each of the plurality of extraction steps is a liquid amount corresponding to the read liquid amount information,
wherein the method further comprises a liquid amount determination step for determining the liquid amount in the extraction vessel (9), and the liquid amount variation graph is displayed based on the liquid amount determined in the liquid amount determination step.

11. A system comprising an extraction device (3) that extracts an extract from an ingredient and a mobile terminal (17),
wherein the extraction device (3) comprises:
an extraction vessel (9) for extracting the extract from an ingredient;
supply means (7) for supplying a liquid to the extraction vessel (9), wherein the supply means (7) is configured to be capable of performing a plurality of extraction steps in succession when the extract is extracted;
control means (11) for controlling the supply of the liquid by the supply means (7);
storage means (11b) for storing a liquid amount in the extraction vessel (9) in each of the plurality of extraction steps as liquid amount information; and
transmission means (11c) for transmitting information required for displaying a variation of the liquid amount in the extraction vessel (9) in the form of a liquid amount variation graph to the mobile terminal (17) when the extract is extracted under the control of the control means (11), and
the mobile terminal (17) comprises:
receiving means for receiving the information required for displaying a variation of the liquid amount in the extraction vessel (9) in the form of a liquid amount variation graph transmitted from the transmission means; and
display means (1801) for displaying the variation of the liquid amount in the extraction vessel (9) in the form of a liquid amount variation graph based on the information received by the receiving means,
wherein the display means (1801) displays the liquid amount variation graph based on the liquid amount information read from the storage means (11b),
the display means (12) displays, in response to a user operation, the liquid amount variation graph by reflecting the operation of the user by modifying and displaying the variation of the liquid amount indicated by a part of the liquid amount variation graph,
the storage means (11b) newly stores liquid amount information corresponding to the liquid amount variation graph in which the operation is reflected, and
the control means (11) reads the liquid amount information newly stored in the storage means (11b), and performs a control so that the liquid amount in the extraction vessel (9) in each of the plurality of extraction steps is a liquid amount corresponding to the read liquid amount information,
wherein the system further comprises liquid amount determination means for determining the liquid amount in the extraction vessel (9), and the display means (12) displays the liquid amount variation graph based on the liquid amount determined by the liquid amount determination means.

## Patentansprüche

1. Extraktionsvorrichtung (3), umfassend:
ein Extraktionsgefäß (9) zum Extrahieren eines Extrakts aus einem Bestandteil;
eine Zuführeinrichtung (7) zum Zuführen einer Flüssigkeit zu dem Extraktionsgefäß (9), wobei die Zuführeinrichtung (7) so konfiguriert ist, dass sie mehrere Extraktionsschritte nacheinander ausführen kann, wenn der Extrakt extrahiert wird;
eine Steuereinrichtung (11) zum Steuern der Zufuhr der Flüssigkeit durch die Zuführeinrichtung (7);
Speichermittel (11b) zum Speichern einer Flüssigkeitsmenge in dem Extraktionsbehälter (9) in jedem der Vielzahl von Extraktionsschritten als Flüssigkeitsmengeninformation; und
Anzeigemittel (12) zum Anzeigen eines Zustands in dem Extraktionsbehälter (9) in Form eines Flüssigkeitsmengenänderungsgraphen, wenn das Extrakt unter der Steuerung der Steuermittel (11) extrahiert wird, wobei der Zustand eine Variation der Flüssigkeitsmenge ist,
wobei die Anzeigeeinrichtung (12) den Flüssigkeitsmengenänderungsgraph auf der Grundlage der aus der Speichereinrichtung (11b) ausgelesenen Flüssigkeitsmengeninformation anzeigt,
wobei die Anzeigeeinrichtung (12) als Reaktion auf eine Benutzerbedienung den Flüssigkeitsmengenänderungsgraph anzeigt, indem sie die Bedienung des Benutzers durch Modifizieren und Anzeigen der Variation der Flüssigkeitsmenge, die durch einen Teil des Flüssigkeitsmengenänderungsgraphen angezeigt wird, wiedergibt,
wobei die Speichereinrichtung (11b) die Flüssigkeitsmengeninformation, die dem Flüssigkeitsmengenänderungsgraph entspricht, in dem die Bedienung wiedergegeben ist, neu speichert, und
die Steuereinrichtung (11) die Flüssigkeitsmengeninformation, die in der Speichereinrichtung (11b) neu gespeichert ist, liest und eine Steuerung durchführt, so dass die Flüssigkeitsmenge in dem Extraktionsgefäß (9) in jedem der Vielzahl von Extraktionsschritten eine Flüssigkeitsmenge ist, die der gelesenen Flüssigkeitsmengeninformation entspricht,
wobei die Extraktionsvorrichtung (3) ferner eine Flüssigkeitsmengenbestimmungseinrichtung zum Bestimmen der Flüssigkeitsmenge in dem Extraktionsbehälter (9) umfasst und die Anzeigeeinrichtung (12) den Flüssigkeitsmengenänderungsgraph basierend auf der durch die Flüssigkeitsmengenbestimmungseinrichtung bestimmten Flüssigkeitsmenge anzeigt.

2. Extraktionsvorrichtung (3) nach Anspruch 1, wobei die Zuführeinrichtung (7) in der Lage ist, einen Luftdruck an das Extraktionsgefäß (9) zu liefern, wobei der Zustand im Extraktionsgefäß (9) der Luftdruck im Extraktionsgefäß (9) ist und die Anzeigeeinrichtung (12) eine Änderung des Luftdrucks im Extraktionsgefäß (9) in Form eines Druckänderungsgraphen anzeigt, wenn das Extrakt extrahiert wird.

3. Extraktionsvorrichtung (3) nach Anspruch 2, wobei das Speichermittel (11b) in der Lage ist, den Luftdruck im Extraktionsbehälter (9) in jedem der mehreren Extraktionsschritte als Druckinformation zu speichern, und das Anzeigemittel (12) den Druckänderungsgraph auf der Grundlage der aus dem Speichermittel (11b) ausgelesenen Druckinformation anzeigt.

4. Extraktionsvorrichtung (3) nach Anspruch 3, wobei die Anzeigeeinrichtung (12) als Reaktion auf eine Benutzerbedienung den Druckänderungsgraph anzeigt, indem sie die Bedienung des Benutzers durch Modifizieren und Anzeigen der durch einen Teil des Druckänderungsgraphen angezeigten Druckveränderung wiedergibt,
wobei die Speichereinrichtung (11b) Druckinformationen entsprechend dem Druckänderungsgraph, in dem die Bedienung wiedergegeben ist, neu speichert und
wobei die Steuereinrichtung (11) die in der Speichereinrichtung (11b) neu gespeicherte Druckinformation liest und eine Steuerung durchführt, so dass der Luftdruck in dem Extraktionsbehälter (9) in jedem der Vielzahl von Extraktionsschritten ein Luftdruck ist, der der gelesenen Druckinformation entspricht.

5. Extraktionsvorrichtung (3) nach einem der Ansprüche 2 bis 4, wobei die Anzeigeeinrichtung (12) in der Lage ist, das Diagramm der Flüssigkeitsmenge und das Diagramm der Druckänderung auf einem Bildschirm anzuzeigen.

6. Extraktionsvorrichtung (3) nach einem der Ansprüche 2 bis 5, wobei der Zustand im Extraktionsbehälter (9) eine Temperatur von heißem Wasser im Extraktionsbehälter (9) ist und
wobei die Anzeigeeinrichtung (12) eine Veränderung der Temperatur von heißem Wasser im Extraktionsbehälter (9) in Form eines Temperaturänderungsgraphen anzeigt, wenn der Extrakt extrahiert wird.

7. Extraktionsvorrichtung (3) nach Anspruch 6, wobei die Speichereinrichtung (11b) in der Lage ist, die Temperatur des heißen Wassers im Extraktionsbehälter (9) in jedem der mehreren Extraktionsschritte als Temperaturinformation zu speichern, und
wobei die Anzeigeeinrichtung (12) den Temperaturänderungsgraph auf der Grundlage der aus der Speichereinrichtung (11b) ausgelesenen Temperaturinformation anzeigt.

8. Extraktionsvorrichtung (3) nach Anspruch 7, wobei die Anzeigeeinrichtung (12) als Reaktion auf eine Benutzerbedienung den Temperaturänderungsgraphen anzeigt, indem sie die Bedienung des Benutzers durch Modifizieren und Anzeigen der durch einen Teil des Temperaturänderungsgraphen angezeigten Temperaturveränderung widerspiegelt,
wobei die Speichereinrichtung (11b) Temperaturinformationen entsprechend dem Temperaturänderungsgraph, in dem die Bedienung widergespiegelt wird, neu speichert und
die Steuereinrichtung (11) die in der Speichereinrichtung (11b) neu gespeicherte Temperaturinformation liest und eine Steuerung durchführt, so dass die Temperatur des heißen Wassers in dem Extraktionsbehälter (9) in jedem der Vielzahl von Extraktionsschritten eine Temperatur des heißen Wassers ist, die der gelesenen Temperaturinformation entspricht.

9. Extraktionsvorrichtung (3) nach einem der Ansprüche 6 bis 8, wobei die Anzeigeeinrichtung (12) in der Lage ist, den Flüssigkeitsmengenänderungsgraph, den Druckänderungsgraph und den Temperaturänderungsgraph auf einem Bildschirm anzuzeigen.

10. Anzeigeverfahren, das von einer Extraktionsvorrichtung (3) durchgeführt wird, umfassend:
einen Zuführungsschritt des Zuführens einer Flüssigkeit zu einem Extraktionsgefäß (9) zum Extrahieren eines Extrakts aus einem Inhaltsstoff, wobei eine Vielzahl von Extraktionsschritten nacheinander durchgeführt werden können, wenn der Extrakt extrahiert wird;
einen Steuerschritt des Steuerns der Zuführung der Flüssigkeit in dem Zuführungsschritt;
einen Speicherschritt zum Speichern einer Flüssigkeitsmenge in dem Extraktionsgefäß (9) in jedem der Vielzahl von Extraktionsschritten als Flüssigkeitsmengeninformation; und
einen Anzeigeschritt zum Anzeigen einer Veränderung der Flüssigkeitsmenge in dem Extraktionsgefäß (9) in Form eines Flüssigkeitsmengenänderungsgraphen, wenn der Extrakt unter der Steuerung des Steuerschritts extrahiert wird, wobei in dem Anzeigeschritt den Flüssigkeitsmengenänderungsgraphen auf der Grundlage der in dem Speicherschritt gespeicherten Flüssigkeitsmengeninformation angezeigt wird,
wobei im Anzeigeschritt als Reaktion auf eine Benutzerbedienung der Flüssigkeitsmengenänderungsgraph angezeigt wird, indem die Bedienung des Benutzers durch Modifizieren und Anzeigen der Variation der Flüssigkeitsmenge, die durch einen Teil des Flüssigkeitsmengenänderungsgraphen angezeigt wird, wiedergegeben wird,
wobei im Speicherschritt Flüssigkeitsmengeninformationen, die dem Flüssigkeitsmengenänderungsgraph entsprechen, in dem die Bedienung wiedergegeben wird, neu gespeichert werden, und
wobei im Steuerungsschritt die im Speicherschritt neu gespeicherte Flüssigkeitsmengeninformation gelesen wird und eine Steuerung durchgeführt wird, so dass die Flüssigkeitsmenge im Extraktionsgefäß (9) in jedem der Vielzahl von Extraktionsschritten eine Flüssigkeitsmenge ist, die der gelesenen Flüssigkeitsmengeninformation entspricht,
wobei das Verfahren ferner einen Flüssigkeitsmengenbestimmungsschritt zum Bestimmen der Flüssigkeitsmenge im Extraktionsgefäß (9) umfasst und der Flüssigkeitsmengenänderungsgraph auf der Grundlage der im Flüssigkeitsmengenbestimmungsschritt bestimmten Flüssigkeitsmenge angezeigt wird.

11. System, umfassend eine Extraktionsvorrichtung (3), die einen Extrakt aus einem Inhaltsstoff extrahiert, und ein mobiles Endgerät (17), wobei die Extraktionsvorrichtung (3) umfasst:
ein Extraktionsgefäß (9) zum Extrahieren des Extrakts aus einem Inhaltsstoff;
eine Zuführeinrichtung (7) zum Zuführen einer Flüssigkeit zu dem Extraktionsgefäß (9), wobei die Zuführeinrichtung (7) so konfiguriert ist, dass sie mehrere Extraktionsschritte nacheinander ausführen kann, wenn der Extrakt extrahiert wird;
Steuermittel (11) zum Steuern der Zufuhr der Flüssigkeit durch das Zufuhrmittel (7);
Speichermittel (11b) zum Speichern einer Flüssigkeitsmenge in dem Extraktionsbehälter (9) in jedem der Vielzahl von Extraktionsschritten als Flüssigkeitsmengeninformation; und
Übertragungsmittel (11c) zum Übertragen von Informationen, die zum Anzeigen einer Änderung der Flüssigkeitsmenge in dem Extraktionsbehälter (9) in Form eines Flüssigkeitsmengenänderungsgraphen an das mobile Endgerät (17) erforderlich sind, wenn das Extrakt unter der Steuerung der Steuermittel (11) extrahiert wird, und
wobei das mobile Endgerät (17) umfasst:
Empfangsmittel zum Empfangen der Informationen, die zum Anzeigen einer Veränderung der Flüssigkeitsmenge in dem Extraktionsbehälter (9) in Form eines von den Übertragungsmitteln übertragenen Flüssigkeitsmengenänderungsgraphen erforderlich sind; und
Anzeigemittel (1801) zum Anzeigen der Veränderung der Flüssigkeitsmenge in dem Extraktionsbehälter (9) in Form eines Flüssigkeitsmengenänderungsgraphen auf der Grundlage der von den Empfangsmitteln empfangenen Informationen,
wobei die Anzeigeeinrichtung (1801) den Flüssigkeitsmengenänderungsgraph auf der Grundlage der aus der Speichereinrichtung (11b) ausgelesenen Flüssigkeitsmengeninformation anzeigt, die Anzeigeeinrichtung (12) in Reaktion auf eine Benutzerbedienung den Flüssigkeitsmengenänderungsgraph anzeigt, indem sie die Bedienung des Benutzers durch Modifizieren und Anzeigen der Änderung der Flüssigkeitsmenge, die durch einen Teil des Flüssigkeitsmengenänderungsgraphen angezeigt wird, wiedergibt,
wobei die Speichereinrichtung (11b) die Flüssigkeitsmengeninformation, die dem Flüssigkeitsmengenänderungsgraph entspricht, in dem die Bedienung wiedergegeben ist, neu speichert, und
wobei die Steuereinrichtung (11) die Flüssigkeitsmengeninformation, die in der Speichereinrichtung (11b) neu gespeichert ist, liest und eine Steuerung durchführt, so dass die Flüssigkeitsmenge in dem Extraktionsgefäß (9) in jedem der Vielzahl von Extraktionsschritten eine Flüssigkeitsmenge ist, die der gelesenen Flüssigkeitsmengeninformation entspricht,
wobei das System ferner eine Flüssigkeitsmengenbestimmungseinrichtung zum Bestimmen der Flüssigkeitsmenge in dem Extraktionsgefäß (9) umfasst und die Anzeigeeinrichtung (12) den Flüssigkeitsmengenänderungsgraph basierend auf der durch die Flüssigkeitsmengenbestimmungseinrichtung bestimmten Flüssigkeitsmenge anzeigt.

## Revendications

1. Dispositif d'extraction (3), comprenant :
un récipient d'extraction (9) pour extraire un extrait à partir d'un ingrédient ;
un moyen d'alimentation (7) pour alimenter le récipient d'extraction (9) en liquide, dans lequel le moyen d'alimentation (7) est configuré pour être en mesure de réaliser une pluralité d'étapes d'extraction successivement lorsque l'extrait est extrait ;
un moyen de commande (11) pour commander l'alimentation du liquide par le moyen d'alimentation (7) ;
un moyen de stockage (11b) pour stocker une quantité de liquide dans le récipient d'extraction (9) lors de chacune de la pluralité d'étapes d'extraction comme informations de quantité de liquide, et
un moyen d'affichage (12) pour afficher un état dans le récipient d'extraction (9) sous la forme d'un graphique de variation de quantité de liquide lorsque l'extrait est extrait sous le contrôle du moyen de commande (11), dans lequel l'état est une variation de la quantité de liquide ;
le dispositif d'affichage (12) affiche le graphique de variation de quantité de liquide sur la base des informations de quantité de liquide lues dans le moyen de stockage (11b) ;
le moyen d'affichage (12) affiche, en réaction à une manœuvre d'utilisateur, le graphique de variation de quantité de liquide en reflétant la manœuvre de l'utilisateur, en modifiant et en affichant la variation de la quantité de liquide indiquée par une partie du graphique de variation de quantité de liquide ;
le moyen de stockage (11b) stocke à nouveau les informations de quantité de liquide correspondant au graphique de variation de quantité de liquide où la manœuvre est reflétée, et
le moyen de commande (11) lit les informations de quantité de liquide stockées à nouveau dans le moyen de stockage (11b), et réalise une commande de telle sorte que la quantité de liquide dans le récipient d'extraction (9) lors de chacune de la pluralité d'étapes d'extraction est une quantité de liquide correspondant aux informations de quantité de liquide lues ;
dans lequel le dispositif d'extraction (3) comprend en outre un moyen de détermination de quantité de liquide pour déterminer la quantité de liquide dans le récipient d'extraction (9), et le moyen d'affichage (12) affiche le graphique de variation de quantité de liquide sur la base de la quantité de liquide déterminée par le moyen de détermination de quantité de liquide.

2. Dispositif d'extraction (3) selon la revendication 1, dans lequel le moyen d'alimentation (7) est en mesure d'alimenter le récipient d'extraction (9) en pression d'air ;
l'état dans le récipient d'extraction (9) est la pression d'air dans le récipient d'extraction (9), et
le moyen d'affichage (12) affiche une variation de la pression d'air dans le récipient d'extraction (9) sous la forme d'un graphique de variation de pression lorsque l'extrait est extrait.

3. Dispositif d'extraction (3) selon la revendication 2, dans lequel le moyen de stockage (11b) est en mesure de stocker la pression d'air dans le récipient d'extraction (9) lors de chacune de la pluralité d'étapes d'extraction comme informations de pression, et
le moyen d'affichage (12) affiche le graphique de variation de pression sur la base des informations de pression lues dans le moyen de stockage (11b).

4. Dispositif d'extraction (3) selon la revendication 3, dans lequel le moyen d'affichage (12) affiche, en réaction à une manœuvre d'utilisateur, le graphique de variation de pression en reflétant la manœuvre de l'utilisateur, en modifiant et en affichant la variation de la pression indiquée par une partie du graphique de variation de pression ;
le moyen de stockage (11b) stocke à nouveau les informations de pression correspondant au graphique de variation de pression où la manœuvre est reflétée, et
le moyen de commande (11) lit les informations de pression stockées à nouveau dans le moyen de stockage (11b), et réalise une commande de telle sorte que la pression d'air dans le récipient d'extraction (9) lors de chacune de la pluralité d'étapes d'extraction est une pression d'air correspondant aux informations de pression lues.

5. Dispositif d'extraction (3) selon l'une quelconque des revendications 2 à 4, dans lequel le dispositif d'affichage (12) est en mesure d'afficher le graphique de variation de quantité de liquide et le graphique de variation de pression sur un écran.

6. Dispositif d'extraction (3) selon l'une quelconque des revendications 2 à 5, dans lequel l'état dans le récipient d'extraction (9) est une température d'eau chaude dans le récipient d'extraction (9), et
le moyen d'affichage (12) affiche une variation de la température d'eau chaude dans le récipient d'extraction (9) sous la forme d'un graphique de variation de température lorsque l'extrait est extrait.

7. Dispositif d'extraction (3) selon la revendication 6, dans lequel le moyen de stockage (11b) est en mesure de stocker la température d'eau chaude dans le récipient d'extraction (9) lors de chacune de la pluralité d'étapes d'extraction comme informations de température, et
le moyen d'affichage (12) affiche le graphique de variation de température sur la base des informations de température lues dans le moyen de stockage (11b).

8. Dispositif d'extraction (3) selon la revendication 7, dans lequel le moyen d'affichage (12) affiche, en réaction à une manœuvre d'utilisateur, le graphique de variation de température en reflétant la manœuvre de l'utilisateur, en modifiant et en affichant la variation de la température indiquée par une partie du graphique de variation de température ;
le moyen de stockage (11b) stocke à nouveau les informations de température correspondant au graphique de variation de température où la manœuvre est reflétée, et
le moyen de commande (11) lit les informations de température stockées à nouveau dans le moyen de stockage (11b), et réalise une commande de telle sorte que la température d'eau chaude dans le récipient d'extraction (9) lors de chacune de la pluralité d'étapes d'extraction est une température d'eau chaude correspondant aux informations de température lues.

9. Dispositif d'extraction (3) selon l'une quelconque des revendications 6 à 8, dans lequel le dispositif d'affichage (12) est en mesure d'afficher le graphique de variation de quantité de liquide, le graphique de variation de pression, et le graphique de variation de température sur un écran.

10. Procédé d'affichage réalisé par un dispositif d'extraction (3), comprenant les étapes suivantes :
une étape d'alimentation pour alimenter un récipient d'extraction (9) en liquide pour extraire un extrait à partir d'un ingrédient,
dans lequel une pluralité d'étapes d'extraction peuvent être réalisées successivement lorsque l'extrait est extrait ;
une étape de commande pour commander l'alimentation en liquide lors de l'étape d'alimentation ;
une étape de stockage pour stocker une quantité de liquide dans le récipient d'extraction (9) lors de chacune de la pluralité d'étapes d'extraction comme informations de quantité de liquide, et
une étape d'affichage pour afficher une variation de la quantité de liquide dans le récipient d'extraction (9) sous la forme d'un graphique de variation de quantité de liquide lorsque l'extrait est extrait sous le contrôle de l'étape de commande ;
lors de l'étape d'affichage, le graphique de variation de quantité de liquide est affiché sur la base des informations de quantité de liquide stockées lors de l'étape de stockage ;
lors de l'étape d'affichage, en réaction à une manœuvre d'utilisateur, le graphique de variation de quantité de liquide est affiché en reflétant la manœuvre de l'utilisateur, en modifiant et en affichant la variation de la quantité de liquide indiquée par une partie du graphique de variation de quantité de liquide ;
lors de l'étape de stockage, les informations de quantité de liquide correspondant au graphique de variation de quantité de liquide, où la manœuvre est reflétée, sont stockées à nouveau, et
lors de l'étape de commande, les informations de quantité de liquide stockées à nouveau lors de l'étape de stockage sont lues, une commande est réalisée de telle sorte que la quantité de liquide dans le récipient d'extraction (9) lors de chacune de la pluralité d'étapes d'extraction est une quantité de liquide correspondant aux informations de quantité de liquide lues ;
dans lequel le procédé comprend en outre une étape de détermination de quantité de liquide pour déterminer la quantité de liquide dans le récipient d'extraction (9), et le graphique de variation de quantité de liquide est affiché sur la base de la quantité de liquide déterminée lors de l'étape de détermination de quantité de liquide.

11. Système comprenant un dispositif d'extraction (3), lequel extrait un extrait à partir d'un ingrédient, et un terminal mobile (17) ;
dans lequel le dispositif d'extraction (3) comprend :
un récipient d'extraction (9) pour extraire l'extrait à partir d'un ingrédient ;
un moyen d'alimentation (7) pour alimenter un récipient d'extraction (9) en liquide, dans lequel le moyen d'alimentation (7) est configuré pour être en mesure de réaliser une pluralité d'étapes d'extraction successivement lorsque l'extrait est extrait ;
un moyen de commande (11) pour commander l'alimentation du liquide par le moyen d'alimentation (7) ;
un moyen de stockage (11b) pour stocker une quantité de liquide dans le récipient d'extraction (9) lors de chacune de la pluralité d'étapes d'extraction comme informations de quantité de liquide, et
un moyen de transmission (11c) pour transmettre des informations requises pour afficher une variation de la quantité de liquide dans le récipient d'extraction (9) sous la forme d'un graphique de variation de quantité de liquide vers le terminal mobile (17) lorsque l'extrait est extrait sous le contrôle du moyen de commande (11), et
le terminal mobile (17) comprend :
un moyen de réception pour recevoir les informations requises pour afficher une variation de la quantité de liquide dans le récipient d'extraction (9) sous la forme d'un graphique de variation de quantité de liquide transmises à partir du moyen de transmission, et
le moyen d'affichage (1801) affiche la variation de la quantité de liquide dans le récipient d'extraction (9) sous la forme d'un graphique de variation de quantité de liquide sur la base des informations reçues par le moyen de réception ;
dans lequel le moyen d'affichage (1801) affiche le graphique de variation de quantité de liquide sur la base des informations de quantité de liquide lues dans le moyen de stockage (11b) ;
dans lequel le moyen d'affichage (12) affiche, en réaction à une manœuvre d'utilisateur, le graphique de variation de quantité de liquide en reflétant la manœuvre de l'utilisateur, en modifiant et en affichant la variation de la quantité de liquide indiquée par une partie du graphique de variation de quantité de liquide ;
le moyen de stockage (11b) stocke à nouveau les informations de quantité de liquide correspondant au graphique de variation de quantité de liquide où la manœuvre est reflétée, et
le moyen de commande (11) lit les informations de quantité de liquide stockées à nouveau dans le moyen de stockage (11b), et réalise une commande de telle sorte que la quantité de liquide dans le récipient d'extraction (9) lors de chacune de la pluralité d'étapes d'extraction est une quantité de liquide correspondant aux informations de quantité de liquide lues, et
dans lequel le système comprend en outre un moyen de détermination de quantité de liquide pour déterminer la quantité de liquide dans le récipient d'extraction (9), et le moyen d'affichage (12) affiche le graphique de variation de quantité de liquide sur la base de la quantité de liquide déterminée par le moyen de détermination de quantité de liquide.
